# EUROPEAN PATENT APPLICATION

(11) **EP 1 128 595 A2**
(43) Date of publication of application: **29.08.2001**
(21) Application number: 01103878.3
(22) Date of filing: 16.02.2001
(51) Int. Cl.: H04L 7/04, H04L 27/22

(54) **Synchronisation of a radio reception apparatus**

(30) Priority: 21.02.2000 JP 2000042267
(71) Applicant: MATSUSHITA ELECTRIC INDUSTRIAL CO., LTD., Kadoma-shi, Osaka 571-8501 (JP)
(72) Inventor: Orihashi, Masayuki, Ichikawa-shi, Chiba 272-0001 (JP); Abe, Katsuaki, Kawasaki-shi, Kanagawa 215-0005 (JP); Msuya, Job Cleopa, Yokosuka-shi, Kanagawa 239-0847 (JP); Sagawa, Morikazu, iNAGI-SHI, tOKYO 206-0821 (JP); Yoneyama, Masayoshi, Yokohama-shi, Kanagawa 241-0803 (JP)
(74) Representative: Grünecker, Kinkeldey, Stockmair & Schwanhäusser Anwaltssozietät

(57) **Abstract**

Convolver 104 calculates convolution integration between symbol number s given by calculation length determination section 118 of a series of known signals sequentially output from known signal storage section 103 and a series of signals corresponding to s symbols selected at symbol intervals from the reception signal series stored in shift register 102 and difference calculation section 105 calculates difference vectors corresponding to 1 symbol of the signal series subjected to convolution integration. Addition section 106 sequentially adds up the calculated difference vectors, calculates addition difference vectors in the same way by shifting the reception signal series 1 sample at a time, memory 107 stores the time of shifting in association with the addition difference vectors and detection section 108 detects parts that satisfy a specific condition from the vectors stored in memory 107.

## Description

### BACKGROUND OF THE INVENTION

### Field of the Invention

The present invention relates to a radio reception apparatus used in a digital radio communication system.

### Description of the Related Art

In digital communications, establishing time synchronization between a transmitter and receiver is a technology of extreme importance. Generally, using a series of known signals, this technology performs processing of calculating a correlation between a series of known signals contained in a reception signal and a series of known signals of the receiver and determines synchronization based on the correlation value. Establishing synchronization is difficult especially when there is a frequency or time shift between the transmitter and receiver such as immediately after power is turned on and at the same time establishing synchronization requires performance with high sensitivity and high accuracy. The technology disclosed in the Unexamined Japanese Patent Publication No.HEI 6-252966 is known as one of time synchronization methods capable of handling such a frequency shift.

However, the conventional time synchronization method handling frequency shifts disclosed in the above publication uses the same principle as that of delay detection for calculating a vector difference during a one-symbol time, and therefore the sensitivity deteriorates down to approximately 3 dB. For this reason, it is difficult to expect high performance from the conventional system in the case of a long-distance communication where the quality of the reception signal is not much expected or a communication system using radio waves of weak output.

### SUMMARY OF THE INVENTION

It is an object of the present invention to provide a radio reception apparatus using a vector difference method capable of handling frequency shifts, drastically improving the sensitivity and stably establishing synchronization even in a communication environment with feeble reception signals.

This object can be attained by performing vector addition processing before calculating difference vectors. Through this addition processing before calculating difference vectors, the signal component and error component are subjected to a vector addition and power addition, respectively, providing an advantageous feature that the signal-to-noise ratio (CNR) is relatively improved.

### BRIEF DESCRIPTION OF THE DRAWINGS

The above and other objects and features of the invention will appear more fully hereinafter from a consideration of the following description taken in connection with the accompanying drawing wherein one example is illustrated by way of example, in which;
FIG.1 is a block diagram showing a configuration of a radio reception apparatus according to Embodiment 1 of the present invention;
FIG.2A illustrates an I signal of a reception signal;
FIG.2B illustrates a Q signal of the reception signal;
FIG.2C is a synchronization estimation signal according to a conventional synchronization method;
FIG.2D is a synchronization estimation signal according to a synchronization method of the present invention;
FIG.3 is a block diagram showing a configuration of a radio reception apparatus according to Embodiment 2 of the present invention;
FIG.4 is a block diagram showing a configuration of a radio reception apparatus according to Embodiment 3 of the present invention;
FIG.5 is a block diagram showing a configuration of a radio reception apparatus according to Embodiment 4 of the present invention;
FIG.6 is a block diagram showing a configuration of a radio reception apparatus according to Embodiment 5 of the present invention;
FIG.7 is a block diagram showing a configuration of a radio reception apparatus according to Embodiment 6 of the present invention;
FIG.8 is a block diagram showing a configuration of a radio reception apparatus according to Embodiment 7 of the present invention;
FIG.9 is a block diagram showing a configuration of a radio reception apparatus according to Embodiment 8 of the present invention;
FIG.10 is a block diagram showing a configuration of a radio reception apparatus according to Embodiment 9 of the present invention; and
FIG.11 is a block diagram showing a configuration of a radio reception apparatus according to Embodiment 10 of the present invention.

### DETAILED DESCRIPTION OF THE PREFERRED EMBODIMENTS

With reference now to the attached drawings, embodiments of the present invention will be explained in detail below.

### (Embodiment 1)

This embodiment describes a radio reception apparatus using a vector difference method capable of handling frequency shifts that performs vector addition processing before calculating difference vectors.

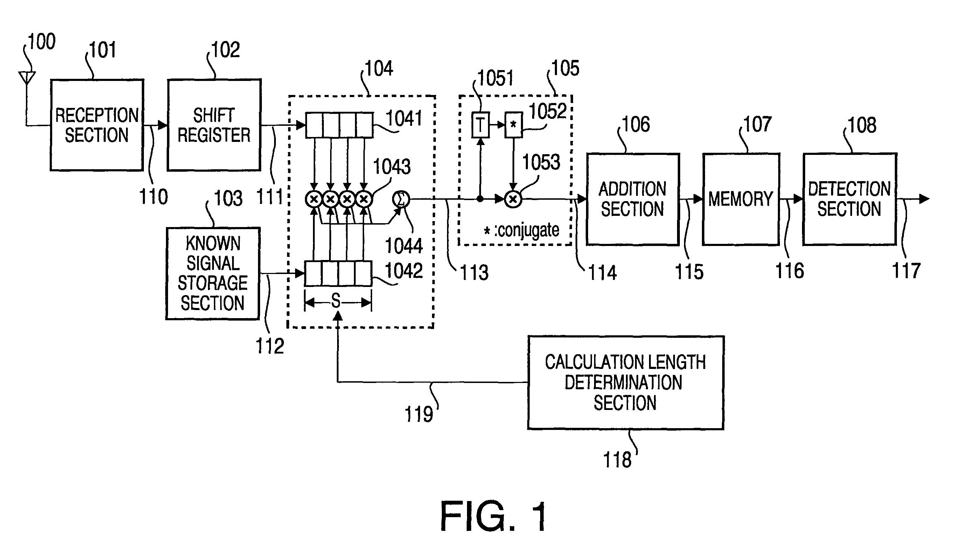

FIG.1 is a block diagram showing a configuration of a radio reception apparatus according to Embodiment 1 of the present invention. Here, the case where a radio reception apparatus is mounted on a communication terminal apparatus will be explained.

A radio signal sent from the other end of communication is received by reception section 101 through antenna 100. Reception section 101 performs predetermined radio reception processing (down-conversion, A/D conversion, etc.) and then demodulation processing on the reception signal. This demodulated signal 110 is output to shift register 102. Shift register 102 stores demodulated signal 110 and outputs as reception signal 111 to convolver 104.

Convolver 104 is configured by delayer 1041 for reception signals, delayer 1042 for known signals, multiplier 1043 for multiplying a reception signal by a known signal and adder 1044 for adding up the multiplication result of multiplier 1043.

Convolver 104 performs matched filtering processing between the reception signal output from shift register 102 and the known signal output from known signal storage section 103 and outputs the processed value (correlation value) as short-term correlation signal 113 to difference calculation section 105. In this case, the length of delayer 1042 for known signals, that is, calculation series length 119 is determined by calculation length determination section 118.

Difference calculation section 105 is configured by delayer 1051 for delaying short-term correlation signal 113, complex conjugator 1052 for finding a complex conjugate of delayed short-term correlation signal 113 and multiplier 1053 for multiplying short-term correlation signal 113 by the complex conjugate of the short-term correlation signal.

Difference calculation section 105 calculates difference vectors corresponding to 1 symbol of short-term correlation signal 113 and outputs as correlation difference signal 114 to addition section 106. Addition section 106 adds up correlation difference signal 114 corresponding to 1 series of known signals 112 and outputs as addition difference signal 115 to memory 107 and memory 107 stores addition difference signal 115.

Detection section 108 calculates the size of the vector series of correlation signals 116 output from memory 107, searches maximum correlation signal 116 and outputs the detected information as detected signal 117.

Then, the operation of the radio reception apparatus having the above configuration will be explained.

Shift register 102 that stores the demodulated signal demodulated by reception section 101 outputs calculation series length 119 (denoted as "s") given by calculation length determination section 118 corresponding to s symbols from the start (time t + 0) of an estimation range as reception signal 111 to reception signal delayer 1041 of convolver 104 (here, suppose calculation series length s = 4).

Known signal storage section 103 outputs s symbols (here, suppose calculation series length s = 4) from a pre-stored known signal as known signal 112 to known signal delayer 1042 of convolver 104.

Convolver 104 performs matched filtering processing (correlation calculation processing) 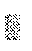 between reception signal 111 and known signal 112. That is, convolver 104 multiplies reception signal 111 by known signal 112 using their respective multipliers 1043 and adds up their respective multiplication results using adder 1044. Convolver 104 outputs the output of adder 1044 as short-term correlation signal 113 to difference calculation section 105. This short-term correlation signal 113 is recognized as a short-term correlation signal at time (t+0).

Then, shift register 102 outputs 4 symbols from the symbol at time (t+1) when 1 symbol is shifted as reception signal 111 to reception signal delayer 1041 of convolver 104. Known signal storage section 103 outputs 4 symbols from the 2nd symbol as known signal 112 to known signal delayer 1042 of convolver 104.

In the same way as that described above, convolver 104 performs matched filtering processing and outputs short-term correlation signal 113 at time (t+1) to difference calculation section 105. In this way, short-term correlation signals 113 are calculated from time (t+0) to time (t+N-4) (N is the signal length of the known signal series).

Calculated short-term correlation signal 113 is sequentially output to difference calculation section 105 and difference calculation section 105 calculates difference vectors corresponding to 1 symbol of short-term correlation signal 113. That is, delayer 1051 delays short-term correlation signal 113 by 1 symbol, complex conjugate section 1052 acquires a complex conjugate of short-term correlation signal 113 and multiplier 1053 multiplies short-term correlation signal 113 by the complex conjugate of short-term correlation signal 113 delayed by 1 symbol. This calculation result is output as correlation difference signal 114 to addition section 106.

Correlation difference signal 114 obtained in this way is calculated for 1 series of known signals 112. Addition section 106 adds up correlation difference signal 114 and outputs the addition result as addition difference signal 115 at time (t+0) to memory 107.

Likewise, addition difference signal 115 at time (t+1) by replacing t with t+1 is calculated. Thus, addition difference signals 115 from time (t+0) to time (t+M-1) are stored in memory 107. At this time, storing the storage location and time information corresponding to addition difference signal 115 in memory 107 according to, for example, a rule that the storage location = time information makes it easier to extract the time information from detection section 108, which will be described later.

Detection section 108 sequentially calculates the size of the vector series of correlation signals 116 output from memory 107, searches correlation signal 116 of the maximum size, finds the size, storage location and its vector information and outputs this detected information as detected signal 117. The synchronization timing is thereby detected. The detection may be performed by providing a predetermined threshold to compare with a vector sequence, and selecting a plurality of candidates exceeding the threshold. Further, the detection may be performed by setting the number of selected vector sequences to a predetermined number, and selecting a predetermined number of vector sequences in descending order of their value.

At this time, the size of correlation signal 116 generally expresses a correlation value between reception signal 101 and known signal 112 to be searched. The greater this value, the more certain this information can be. Next, the storage location shows a strong correlation with the time information as described above, and therefore it is easy to convert the storage location to the time information. The time information at this time indicates that known signal 112 to be searched is within the detected time of reception signal 101. Because of this, in a system in which a sync signal is inserted in a specific location of burst, it is possible to detect a sync signal in demodulated signal 110 by regarding this sync signal as known signal 112 and the reception burst signal as demodulated signal 110 and thereby establish synchronization with the system.

Furthermore, by detection section 108 detecting m peak positions and vectors from the maximum value of correlation signal 116, it is also possible to estimate a multipath condition that occurs due to differences in the propagation path.

Here, the effects of performing matched filtering processing before calculating difference vectors will be explained. In a conventional difference vector calculation (delay detection), a difference vector is calculated between a reception signal and this reception signal delayed by one unit time (for example, 1-symbol time) . Normally, a desired signal and noise are superimposed on a reception signal. Calculating a difference vector using the signal with the desired signal and noise superimposed would mean multiplying between signals with superimposed noise. On the other hand, coherent detection multiplies a reception signal with superimposed noise by a known signal without superimposed noise. For this reason, a signal detected by delay detection has a noise level greater by approximately 3 dB than a signal detected by coherent detection.

The present invention carries out matched filtering processing through convolver 104 before calculating difference vectors. In matched filtering processing, desired signal components are subjected to a vector addition, while noise components are subjected to a power addition. The result of this vector addition corresponds to the result of a power addition, and therefore power of a desired signal is affected by the result of the vector addition at a rate of the square thereof. Thus, calculating the power ratio of the desired signal component to the noise component allows a large gain to be obtained. This makes it possible to detect a desired signal with a maximum C/N ratio (gain) from a reception signal with superimposed noise. Calculating difference vectors (delay detection) after this means calculating difference vectors using a reception signal without superimposed noise, and can reduce the error rate of the signal after delay detection as a result.

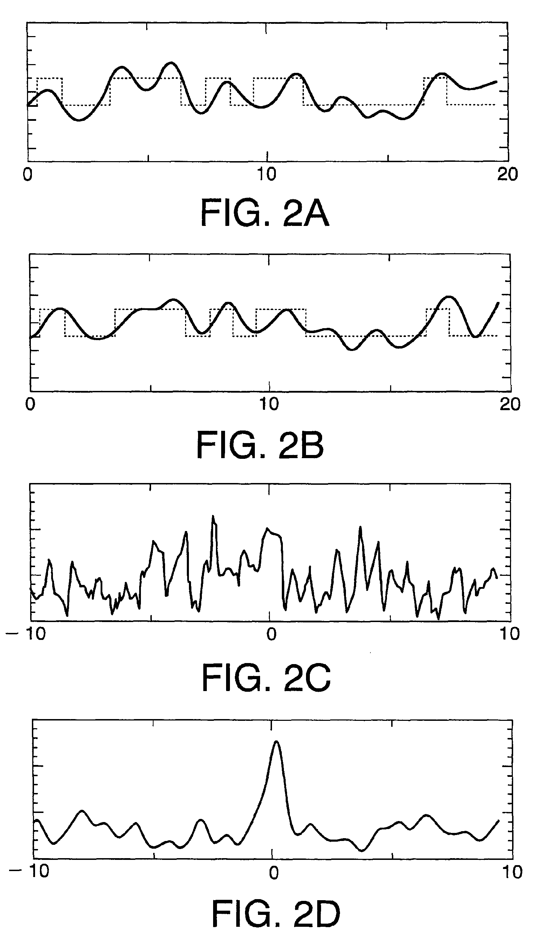

The contents described above will be explained using FIG.2A to FIG.2D. FIG.2A shows an I (in-phase component) signal of a reception signal and FIG.2B shows a Q (quadrature component) signal of the reception signal. In order to eliminate a frequency offset as in the case of the prior art, applying a difference vector calculation to the I signal shown in FIG.2A and Q signal shown in FIG.2B would mean a calculation between signals with superimposed noise and deteriorate the C/N ratio as shown in FIG.2C.

The present invention applies matched filtering processing using a known signal to the I signal shown in FIG.2A and Q signal shown in FIG.2B first. This increases the gain of the desired signal to noise and improves the C/N ratio of the reception signal. Applying a difference vector calculation to this signal with the improved C/N ratio to eliminate the frequency offset will improve the accuracy of detecting a synchronization estimation signal as shown in FIG.2D.

This embodiment describes the case where matched filtering processing is carried out by a convolver, but the present invention is also applicable to a case where matched filtering processing is carried out by a transversal filter or SAW filter.

This embodiment describes the case where calculation series length 119 (s) given by calculation length determination section 118 is 4, but the present invention is also applicable to a case where calculation series length s is not 4. The greater the calculation series length, the greater the effect of averaging noise is. For example, an improvement to the characteristic by averaging is expected by setting s=4, thus drastically alleviating the reception environment condition for establishing synchronization and offering prospects of great effects especially in a harsh CNR environment. On the other hand, since the phase is shifted for every symbol due to influences of frequency shifts, increasing calculation series length s will make the system more susceptible to frequency shifts, etc. For this reason, whether or not to increase calculation series length s up to a size equivalent to the known signal series length should be considered according to the situation as appropriate. The optimal value of this calculation series length s depends on conditions such as the symbol rate, frequency accuracy and system design. In general, the frequency accuracy is sufficiently high with respect to the symbol rate, and therefore problems are not likely to occur if s is set within the range of 4 to 6.

Furthermore, this embodiment describes the method of estimating the time during which known signal 112 exists from the peak position of correlation signal 116, but correlation signal 116 has various other characteristics and can also be used to estimate a multipath environment by detecting a plurality of peaks, for example.

Furthermore, this embodiment describes the case of 1 sample per 1 symbol, but the present invention can also be implemented in the case of 4 samples per 1 symbol by setting a time step of addition difference signal 115 to 1/4 (t+0, t+1/4, t+2/4, t+3/4, t+1, t+5/4, ···). Of course, there are no restrictions on the number of samples per 1 symbol and changing this step will make the present invention applicable to any number of samples.

### (Embodiment 2)

This embodiment describes a case where a known signal is changed when matched filtering processing is performed by convolver 104.

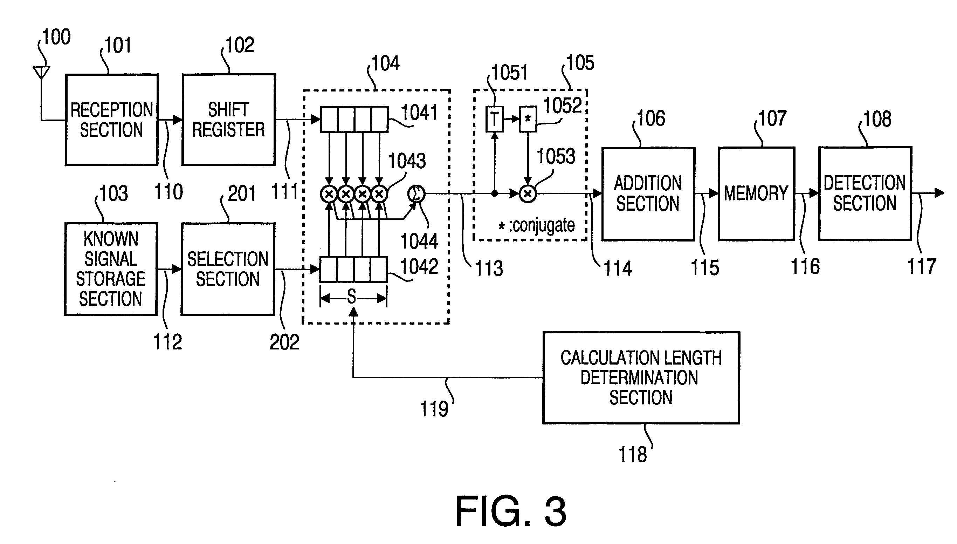

FIG.3 is a block diagram showing a configuration of a radio reception apparatus according to Embodiment 2 of the present invention. In FIG.3, the same components as those in FIG.1 are assigned the same reference numerals and detailed explanations thereof will be omitted.

The radio reception apparatus shown in FIG.3 is provided with selection section 201 for selecting known signal 112 output from known signal storage section 103. Therefore, the known signal output to known signal delayer 1042 of convolver 104 is selected known signal 202 selected from known signals stored in known signal storage section 103.

In the radio reception apparatus as configured above, shift register 102 that stores demodulated signal 110 demodulated by reception section 101 outputs s symbols of calculation series length 119 (denoted as "s") given by calculation length determination section 118 from the start (time t+0) of the estimation range to reception signal delayer 1041 of convolver 104 as reception signal 111 (here, suppose calculation series length s=4).

Selection section 201 selects one of n types of known signals stored in known signal storage section 103 and outputs s symbols (here, suppose calculation series length s=4) from the start of the selected known signal to known signal delayer 1042 of convolver 104 as selected known signal 202.

Convolver 104 performs matched filtering processing between reception signal 111 and selected known signal 202. That is, convolver 104 multiplies reception signal 111 and selected known signal 202 using their respective multipliers 1043 and adds up their respective multiplication results using adder 1044. Convolver 104 outputs the output of adder 1044 as short-term correlation signal 113 to difference calculation section 105. This short-term correlation signal 113 is recognized as a short-term correlation signal at time (t+0).

Then, shift register 102 outputs 4 symbols from the symbol at time (t+1) when 1 symbol is shifted as reception signal 111 to reception signal delayer 1041 of convolver 104. Known signal storage section 103 outputs 4 symbols from the 2nd symbol of the selected known signal as selected known signal 202 to known signal delayer 1042 of convolver 104.

In the same way as that described above, convolver 104 performs matched filtering processing and outputs short-term correlation signal 113 at time (t+1) to difference calculation section 105. In this way, short-term correlation signals 113 are calculated from time (t+0) to time (t+N-4) (N is the signal length of the known signal series).

Calculated short-term correlation signal 113 is sequentially output to difference calculation section 105 and difference calculation section 105 calculates difference vectors corresponding to 1 symbol of short-term correlation signal 113. That is, delayer 1051 delays short-term correlation signal 113 by 1 symbol, complex conjugate section 1052 acquires a complex conjugate of the short-term correlation signal and multiplier 1053 multiplies short-term correlation signal 113 by the complex conjugate of short-term correlation signal 113 delayed by 1 symbol. This calculation result is output as correlation difference signal 114 to addition section 106.

Correlation difference signal 114 obtained in this way is calculated for 1 series of selected known signals 202. Addition section 106 adds up correlation difference signal 114 and outputs the addition result as addition difference signal 115 at time (t+0) to memory 107.

Likewise, addition difference signal 115 at time (t+1) by replacing t with t+1 is calculated. Thus, addition difference signals 115 from time (t+0) to time (t+M-1) are stored in memory 107.

When the calculation of the first known signal series is completed, selection section 201 selects a second known signal series and carries out the above processing. The selection section 201 continues the above processing until the calculation of all (or some of) known signal series is completed.

At this time, storing the storage location, the type of a series of known signals and time information corresponding to addition difference signal 115 in memory 107 according to, for example, a rule that the storage location = (known signal series information, time information) makes it easier to extract the known signal series and time information from detection section 108, which will be described later.

Detection section 108 sequentially calculates the size of the vector series of correlation signals 116 output from memory 107, searches correlation signal 116 of the maximum size, finds the size, storage location, the corresponding known signal series and its vector information and outputs this detected information as detected signal 117. Since the known signal series thus corresponds to the vector information, the detection of a vector with the maximum size enables the known signal series corresponding to the vector to be specified.

At this time, the size of correlation signal 116 generally expresses a correlation value between reception signal 101 and known signal 112 to be searched. The greater this value, the more certain this information can be. Next, the storage location shows a strong correlation with the time information as described above, and therefore it is easy to convert the storage location to the time information. The time information at this time indicates that known signal 112 to be searched is within the detected time of reception signal 101. Because of this, in a system in which sync signals of a plurality of types are inserted in a specific location of burst, it is possible to detect the type and location of a sync signal in demodulated signal 110 by regarding this sync signal as known signal 112 and the reception burst signal as demodulated signal 110 and thereby establish synchronization with the system.

Furthermore, by detection section 108 detecting m peak positions and vectors from the maximum value of correlation signal 116, it is also possible to estimate a multipath condition that occurs due to differences in the propagation path.

This embodiment describes the case where calculation series length 119 (s) given by calculation series length 118 is 4, but the present invention is also applicable to a case where calculation series length s is not 4. The greater the calculation series length, greater the effect of averaging of noise is. For example, an improvement to the characteristic by averaging is expected by setting s=4, thus drastically alleviating the reception environment condition for establishing synchronization and offering prospects of great effects especially in a harsh CNR environment. On the other hand, since the phase is shifted for every symbol due to influences of frequency shifts, increasing calculation series length s will make the system more susceptible to frequency shifts, etc.

For this reason, whether or not to increase calculation series length s up to a size equivalent to the known signal series length should be considered according to the situation as appropriate. The optimal value of this calculation series length s depends on conditions such as the symbol rate, frequency accuracy and system design. In general, the frequency accuracy is sufficiently high with respect to the symbol rate, and therefore problems are not likely to occur if s is set within the range of 4 to 6.

Furthermore, this embodiment describes the method of estimating corresponding known signal 112 and the time during which known signal 112 exists from the peak position of correlation signal 116, but correlation signal 116 has various other characteristics and can also be used to estimate a multipath environment by detecting a plurality of peaks, for example.

Furthermore, this embodiment describes the case of 1 sample per 1 symbol, but the present invention can also be implemented in the case of 4 samples per 1 symbol by setting a time step of addition difference signal 115 to 1/4 (t+0, t+1/4, t+2/4, t+3/4, t+1, t+5/4, ···). Of course, changing this step otherwise will make the present invention applicable to any samples.

### (Embodiment 3)

This embodiment describes a case where frequency estimation is performed using the detection information output from detection section 108.

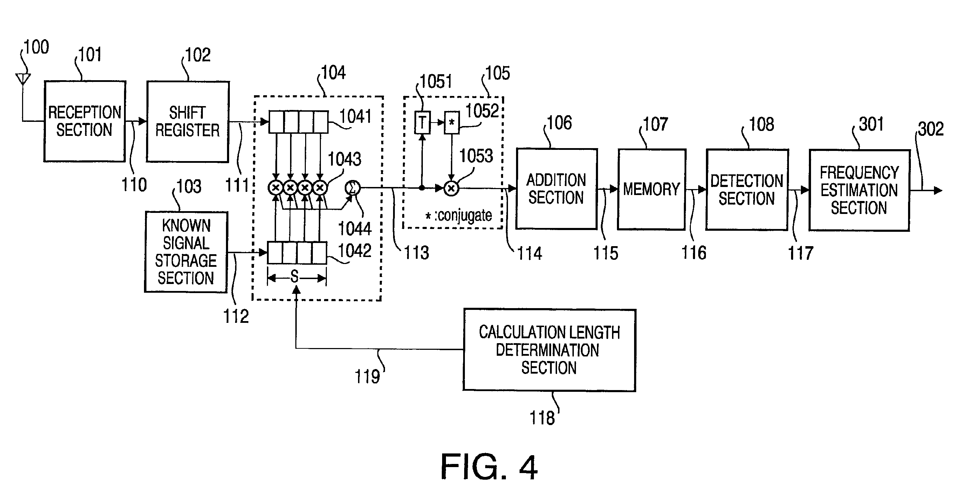

FIG.4 is a block diagram showing a configuration of a radio reception apparatus according to Embodiment 3 of the present invention. In FIG.4, the same components as those in FIG.1 are assigned the same reference numerals and detailed explanations thereof will be omitted.

The radio reception apparatus shown in FIG.4 is provided with frequency estimation section 301 for estimating a frequency based on the detection information output from detection section 108. Estimated frequency 302 estimated by frequency estimation section 301 is output.

In the radio reception apparatus as configured above, shift register 102 that stores demodulated signal 110 demodulated by reception section 101 outputs s symbols of calculation series length 119 (denoted as "s") given by calculation length determination section 118 from the start (time t+0) of the estimation range to reception signal delayer 1041 of convolver 104 as reception signal 111 (here, suppose calculation series length s=4).

Known signal storage section 103 outputs s symbols (here, suppose calculation series length s=4) from the start of the known signal to known signal delayer 1042 of convolver 104 as known signal 112.

Convolver 104 performs matched filtering processing between reception signal 111 and known signal 112. That is, convolver 104 multiplies reception signal 111 by known signal 112 using their respective multipliers 1043 and adds up their respective multiplication results using adder 1044. Convolver 104 outputs the output of adder 1044 as short-term correlation signal 113 to difference calculation section 105. This short-term correlation signal 113 is recognized as a short-term correlation signal at time (t+0).

Then, shift register 102 outputs 4 symbols from the symbol at time (t+1) when 1 symbol is shifted as reception signal 111 to reception signal delayer 1041 of convolver 104. Known signal storage section 103 outputs 4 symbols from the 2nd symbol of the known signal as known signal 112 to known signal delayer 1042 of convolver 104.

In the same way as that described above, convolver 104 performs matched filtering processing and outputs short-term correlation signal 113 at time (t+1) to difference calculation section 105. In this way, short-term correlation signals 113 are calculated from time (t+0) to time (t+N-4) (N is the signal length of the known signal series).

Calculated short-term correlation signal 113 is sequentially output to difference calculation section 105 and difference calculation section 105 calculates difference vectors corresponding to 1 symbol of short-term correlation signal 113. That is, delayer 1051 delays short-term correlation signal 113 by 1 symbol, complex conjugate section 1052 acquires a complex conjugate of the short-term correlation signal and multiplier 1053 multiplies short-term correlation signal 113 by the complex conjugate of short-term correlation signal 113 delayed by 1 symbol. This calculation result is output as correlation difference signal 114 to addition section 106.

Correlation difference signal 114 obtained in this way is calculated for 1 series of known signals 112. Addition section 106 adds up correlation difference signal 114 and outputs the addition result as addition difference signal 115 at time (t+0) to memory 107.

Likewise, addition difference signal 115 at time (t+1) by replacing t with t+1 is calculated. Thus, addition difference signals 115 from time (t+0) to time (t+M-1) are stored in memory 107. At this time, storing the storage location and time information corresponding to addition difference signal 115 in memory 107 according to, for example, a rule that the storage location = time information makes it easier to extract the known signal series and time information from detection section 108, which will be described later.

Detection section 108 sequentially calculates the size of the vector series of correlation signals 116 output from memory 107, searches correlation signal 116 of the maximum size, finds the size, storage location and its vector information and outputs this detected information as detected signal 117.

At this time, the size of correlation signal 116 generally expresses a correlation value between reception signal 101 and known signal 112 to be searched. The greater this value, the more certain this information can be. Next, the storage location shows a strong correlation with the time information as described above, and therefore it is easy to convert the storage location to the time information. The time information at this time indicates that known signal 112 to be searched is within the detected time of reception signal 101. Because of this, in a system in which sync signals of a plurality of types are inserted in a specific location of burst, it is possible to detect the type and location of a sync signal in demodulated signal 110 by regarding this sync signal as known signal 112 and the reception burst signal as demodulated signal 110 and thereby establish synchronization with the system.

Furthermore, by detection section 108 detecting m peak positions and vectors from the maximum value of correlation signal 116, it is also possible to estimate a multipath condition that occurs due to differences in the propagation path.

Furthermore, this correlation signal 116 performs a convolution calculation between reception signal 111 and known signal 112, removes the information component and uses the difference vector, and in this way the vector angle includes a frequency component. Frequency estimation section 301 detects the frequency component from detected signal 117 output from detection section 108 and outputs estimated frequency 302. This estimated frequency 302 can be generally used as a frequency shift between the transmitter and receiver and estimated frequency 302 can also be used as the control signal of frequency control, for example.

This embodiment describes the case where calculation series length 119 (s) given by calculation series length 118 is 4, but the present invention is also applicable to a case where calculation series length s is not 4. The greater the calculation series length, greater the effect of averaging of noise is. For example, an improvement to the characteristic by averaging is expected by setting s=4, thus drastically alleviating the reception environment condition for establishing synchronization and offering prospects of great effects especially in a harsh CNR environment. On the other hand, since the phase is shifted for every symbol due to influences of frequency shifts, increasing calculation series length s will make the system more susceptible to frequency shifts, etc.

For this reason, whether or not to increase calculation series length s up to a size equivalent to the known signal series length should be considered according to the situation as appropriate. The optimal value of this calculation series length s depends on conditions such as the symbol rate, frequency accuracy and system design. In general, the frequency accuracy is sufficiently high with respect to the symbol rate, and therefore problems are not likely to occur if s is set within the range of 4 to 6.

This embodiment describes the case where difference calculation section 105 calculates difference vectors corresponding to 1 symbol, but calculating difference vectors between 2 symbols doubles the amount of variation of difference vector 114 corresponding to the frequency. Because of this, when the CNR is sufficient and it is desired to improve the frequency accuracy, it is recommended to increase calculation symbol intervals.

Furthermore, this embodiment describes the method of estimating corresponding known signal 112 and the time during which known signal 112 exists from the peak position of correlation signal 116, but correlation signal 116 has various other characteristics and can also be used to estimate a multipath environment by detecting a plurality of peaks, for example.

Furthermore, this embodiment describes the case of 1 sample per 1 symbol, but the present invention can also be implemented in the case of 4 samples per 1 symbol by setting a time step of addition difference signal 115 to 1/4 (t+0, t+1/4, t+2/4, t+3/4, t+1, t+5/4, ...). Of course, changing this step otherwise will make the present invention applicable to any samples.

This embodiment describes the case where matched filtering processing is carried out by the convolver, but the present invention is also applicable to a case where matched filtering processing is carried out by a transversal filter or SAW filter.

### (Embodiment 4)

This embodiment describes a case where a known signal is changed when convolver 104 performs matched filtering processing and frequency estimation is performed using the detection information output from detection section 108.

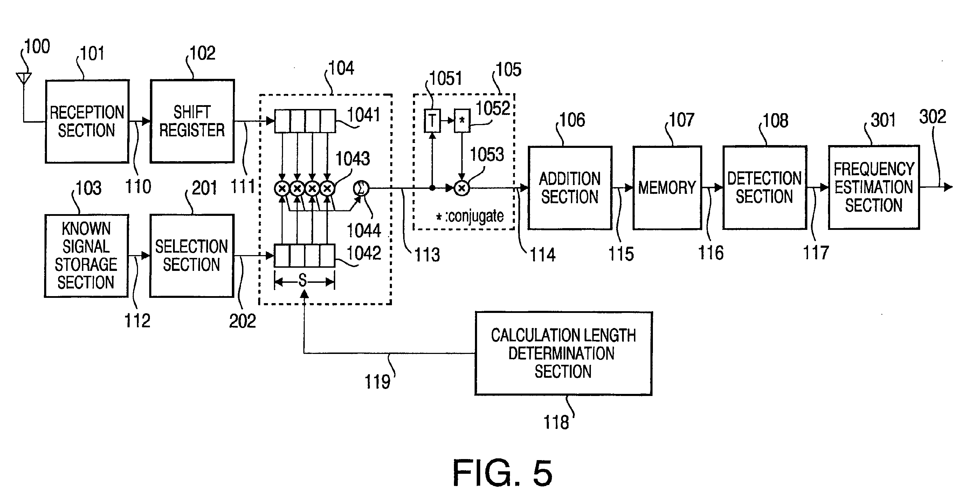

FIG.5 is a block diagram showing a configuration of a radio reception apparatus according to Embodiment 4 of the present invention. In FIG.5, the same components as those in FIG.1 are assigned the same reference numerals and detailed explanations thereof will be omitted.

The radio reception apparatus shown in FIG.5 is provided with selection section 201 for selecting known signal 112 output from known signal storage section 103 and frequency estimation section 301 for estimating a frequency based on the detection information output from detection section 108. Estimated frequency 302 estimated by frequency estimation section 301 is output. Therefore, the known signal output to known signal delayer 1042 of convolver 104 is selected known signal 202 selected from among known signals stored in known signal storage section 103. Furthermore, frequency estimation section 301 outputs the estimated frequency based on the detected information (detected signal 117).

In the radio reception apparatus as configured above, shift register 102 that stores demodulated signal 110 demodulated by reception section 101 outputs s symbols of calculation series length 119 (denoted as "s") given by calculation length determination section 118 from the start (time t+0) of the estimation range to reception signal delayer 1041 of convolver 104 as reception signal 111 (here, suppose calculation series length s=4).

Selection section 201 selects one of n types of known signals stored in known signal storage section 103 and outputs s symbols (here, suppose calculation series length s=4) from the start of the selected known signal to known signal delayer 1042 of convolver 104 as selected known signal 202.

Convolver 104 performs matched filtering processing between reception signal 111 and selected known signal 202. That is, convolver 104 multiplies reception signal 111 and selected known signal 202 using their respective multipliers 1043 and adds up their respective multiplication results using adder 1044. Convolver 104 outputs the output of adder 1044 as short-term correlation signal 113 to difference calculation section 105. This short-term correlation signal 113 is recognized as a short-term correlation signal at time (t+0).

Then, shift register 102 outputs 4 symbols from the symbol at time (t+1) when 1 symbol is shifted as reception signal 111 to reception signal delayer 1041 of convolver 104. Known signal storage section 103 outputs 4 symbols from the 2nd symbol of the selected known signal as selected known signal 202 to known signal delayer 1042 of convolver 104.

In the same way as that described above, convolver 104 performs matched filtering processing and outputs short-term correlation signal 113 at time (t+1) to difference calculation section 105. In this way, short-term correlation signals 113 are calculated from time (t+0) to time (t+N-4) (N is the signal length of the known signal series).

Calculated short-term correlation signal 113 is sequentially output to difference calculation section 105 and difference calculation section 105 calculates difference vectors corresponding to 1 symbol of short-term correlation signal 113. That is, delayer 1051 delays short-term correlation signal 113 by 1 symbol, complex conjugate section 1052 acquires a complex conjugate of the short-term correlation signal and multiplier 1053 multiplies short-term correlation signal 113 by the complex conjugate of short-term correlation signal 113 delayed by 1 symbol. This calculation result is output as correlation difference signal 114 to addition section 106.

Correlation difference signal 114 obtained in this way is calculated for 1 series of selected known signals 202. Addition section 106 adds up correlation difference signal 114 and outputs the addition result as addition difference signal 115 at time (t+0) to memory 107.

Likewise, addition difference signal 115 at time (t+1) by replacing t with t+1 is calculated. Thus, addition difference signals 115 from time (t+0) to time (t+M-1) are stored in memory 107.

When the calculation of the first known signal series is completed, selection section 201 selects a second known signal series and carries out the above processing. The selection section 201 continues the above processing until the calculation of all (or some of) known signal series is completed.

At this time, storing the storage location, the type of the known signal series and time information corresponding to addition difference signal 115 in memory 107 according to, for example, a rule that the storage location = (known signal series information, time information) makes it easier to extract the known signal series and time information from detection section 108, which will be described later.

Detection section 108 sequentially calculates the size of the vector series of correlation signals 116 output from memory 107, searches correlation signal 116 of the maximum size, finds the size, storage location, the corresponding known signal series and its vector information and outputs this detected information as detected signal 117.

At this time, the size of correlation signal 116 generally expresses a correlation value between reception signal 101 and known signal 112 to be searched. The greater this value, the more certain this information can be. Next, the storage location shows a strong correlation with the time information as described above, and therefore it is easy to convert the storage location to the time information. The time information at this time indicates that known signal 112 to be searched is within the detected time of reception signal 101. Because of this, in a system in which sync signals of a plurality of types are inserted in a specific location of burst, it is possible to detect the type and location of a sync signal in demodulated signal 110 by regarding this sync signal as known signal 112 and the reception burst signal as demodulated signal 110 and thereby establish synchronization with the system.

Furthermore, by detection section 108 detecting m peak positions and vectors from the maximum value of correlation signal 116, it is also possible to estimate a multipath condition that occurs due to differences in the propagation path.

Furthermore, this correlation signal 116 performs a convolution calculation between reception signal 111 and known signal 112, removes the information component and uses the difference vector, and in this way the vector angle includes a frequency component. Frequency estimation section 301 detects the frequency component from detected signal 117 output from detection section 108 and outputs estimated frequency 302. This estimated frequency 302 can be generally used as a frequency shift between the transmitter and receiver and estimated frequency 302 can also be used as the control signal of frequency control, for example.

This embodiment describes the case where calculation series length 119 (s) given by calculation series length 118 is 4, but the present invention is also applicable to a case where calculation series length s is not 4. The greater the calculation series length, greater the effect of averaging of noise is. For example, an improvement to the characteristic by averaging is expected by setting s=4, thus drastically alleviating the reception environment condition for establishing synchronization and offering prospects of great effects especially in a harsh CNR environment. On the other hand, since the phase is shifted for every symbol due to influences of frequency shifts, increasing calculation series length s will make the system more susceptible to frequency shifts, etc.

For this reason, whether or not to increase calculation series length s up to a size equivalent to the known signal series length should be considered according to the situation as appropriate. The optimal value of this calculation series length s depends on conditions such as the symbol rate, frequency accuracy and system design. In general, the frequency accuracy is sufficiently high with respect to the symbol rate, and therefore problems are not likely to occur if s is set within the range of 4 to 6.

This embodiment describes the case where difference calculation section 105 calculates difference vectors corresponding to 1 symbol, but calculating difference vectors between 2 symbols doubles the amount of variation of difference vector 114 corresponding to the frequency. Because of this, when the CNR is sufficient and it is desired to improve the frequency accuracy, it is recommended to increase calculation symbol intervals.

Furthermore, this embodiment describes the method of estimating corresponding known signal 112 and the time during which known signal 112 exists from the peak position of correlation signal 116, but correlation signal 116 has various other characteristics and can also be used to estimate a multipath environment by detecting a plurality of peaks, for example.

Furthermore, this embodiment describes the case of 1 sample per 1 symbol, but the present invention can also be implemented in the case of 4 samples per 1 symbol by setting a time step of addition difference signal 115 to 1/4 (t+0, t+1/4, t+2/4, t+3/4, t+1, t+5/4, ···). Of course, changing this step otherwise will make the present invention applicable to any samples.

### (Embodiment 5)

This embodiment describes a case where power is calculated using addition difference signal 115, which is the output of addition section 106.

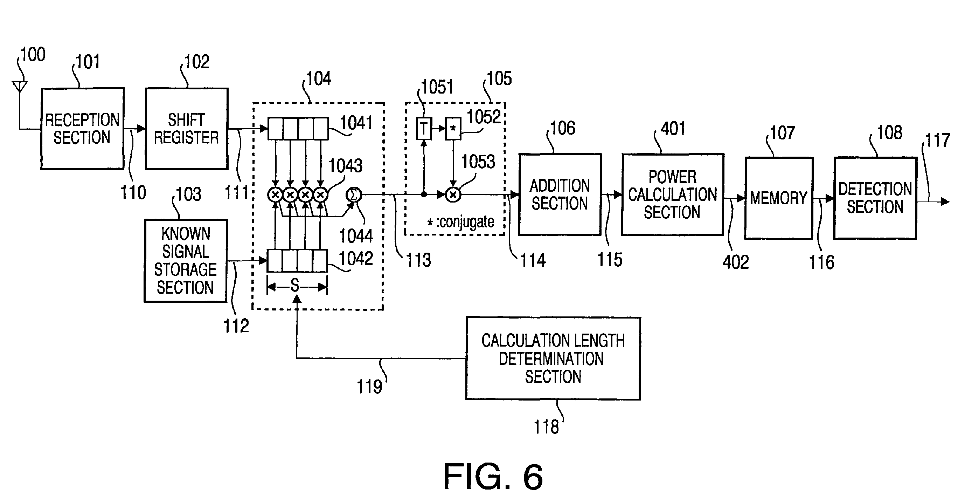

FIG.6 is a block diagram showing a configuration of a radio reception apparatus according to Embodiment 5 of the present invention. In FIG.6, the same components as those in FIG.1 are assigned the same reference numerals and detailed explanations thereof will be omitted.

The radio reception apparatus shown in FIG.6 is provided with power calculation section 401 for calculating power using addition difference signal 115, which is the output of addition section 106. Therefore, power signal 402 obtained by power calculation section 401 is output to memory 107.

In the radio reception apparatus as configured above, shift register 102 that stores demodulated signal 110 demodulated by reception section 101 outputs s symbols of calculation series length 119 (denoted as "s") given by calculation length determination section 118 from the start (time t+0) of the estimation range to reception signal delayer 1041 of convolver 104 as reception signal 111 (here, suppose calculation series length s=4).

Known signal storage section 103 outputs s symbols (here, suppose calculation series length s=4) from the start of the known signal to known signal delayer 1042 of convolver 104 as known signal 112.

Convolver 104 performs matched filtering processing between reception signal 111 and known signal 112. That is, convolver 104 multiplies reception signal 111 by known signal 112 using their respective multipliers 1043 and adds up their respective multiplication results using adder 1044. Convolver 104 outputs the output of adder 1044 as short-term correlation signal 113 to difference calculation section 105. This short-term correlation signal 113 is recognized as a short-term correlation signal at time (t+0).

Then, shift register 102 outputs 4 symbols from the symbol at time (t+1) when 1 symbol is shifted as reception signal 111 to reception signal delayer 1041 of convolver 104. Known signal storage section 103 outputs 4 symbols from the 2nd symbol of the known signal as known signal 112 to known signal delayer 1042 of convolver 104.

In the same way as that described above, convolver 104 performs matched filtering processing and outputs short-term correlation signal 113 at time (t+1) to difference calculation section 105. In this way, short-term correlation signals 113 are calculated from time (t+0) to time (t+N-4) (N is the signal length of the known signal series).

Calculated short-term correlation signal 113 is sequentially output to difference calculation section 105 and difference calculation section 105 calculates difference vectors corresponding to 1 symbol of short-term correlation signal 113. That is, delayer 1051 delays short-term correlation signal 113 by 1 symbol, complex conjugate section 1052 acquires a complex conjugate of the short-term correlation signal and multiplier 1053 multiplies short-term correlation signal 113 by the complex conjugate of short-term correlation signal 113 delayed by 1 symbol. This calculation result is output as correlation difference signal 114 to addition section 106.

Correlation difference signal 114 obtained in this way is calculated for 1 series of selected known signals 202. Addition section 106 adds up correlation difference signal 114 and outputs the addition result as addition difference signal 115 at time (t+0) to power calculation section 401.

Likewise, addition difference signal 115 at time (t+1) by replacing t with t+1 is calculated. Thus, addition difference signal 115 from time (t+0) to time (t+M-1) is output to power calculation section 401 and power calculation section 401 calculates a vector power value using addition difference signal 115 and outputs the calculation result to memory 107 as power signal 402.

At this time, storing the storage location and time information corresponding to power signal 402 in memory 107 according to, for example, a rule that the storage location = time information makes it easier to extract the known signal series and time information from detection section 108, which will be described later.

Detection section 108 sequentially calculates the size of the vector series of correlation signals 116 output from memory 107, searches correlation signal 116 of the maximum size, finds the size, storage location, and its vector information and outputs this detected information as detected signal 117.

At this time, the size of correlation signal 116 generally expresses a correlation value between reception signal 101 and known signal 112 to be searched. The greater this value, the more certain this information can be. Next, the storage location shows a strong correlation with the time information as described above, and therefore it is easy to convert the storage location to the time information. The time information at this time indicates that known signal 112 to be searched is within the detected time of reception signal 101. Because of this, in a system in which sync signals of a plurality of types are inserted in a specific location of burst, it is possible to detect the type and location of a sync signal in demodulated signal 110 by regarding this sync signal as known signal 112 and the reception burst signal as demodulated signal 110 and thereby establish synchronization with the system.

Furthermore, by detection section 108 detecting m peak positions and vectors from the maximum value of correlation signal 116, it is also possible to estimate a multipath condition that occurs due to differences in the propagation path.

This embodiment describes the case where calculation series length 119 (s) given by calculation series length 118 is 4, but the present invention is also applicable to a case where calculation series length s is not 4. The greater the calculation series length, greater the effect of averaging of noise is. For example, an improvement to the characteristic by averaging is expected by setting s=4, thus drastically alleviating the reception environment condition for establishing synchronization and offering prospects of great effects especially in a harsh CNR environment. On the other hand, since the phase is shifted for every symbol due to influences of frequency shifts, increasing calculation series length s will make the system more susceptible to frequency shifts, etc.

For this reason, whether or not to increase calculation series length s up to a size equivalent to the known signal series length should be considered according to the situation as appropriate. The optimal value of this calculation series length s depends on conditions such as the symbol rate, frequency accuracy and system design. In general, the frequency accuracy is sufficiently high with respect to the symbol rate, and therefore problems are not likely to occur if s is set within the range of 4 to 6.

Furthermore, this embodiment describes the method of estimating corresponding known signal 112 and the time during which known signal 112 exists from the peak position of correlation signal 116, but correlation signal 116 has various other characteristics and can also be used to estimate a multipath environment by detecting a plurality of peaks, for example.

This embodiment uses a vector power value as the information stored in memory 107, and thus is characterized in that if the vector value is information consisting of two elements such as (x,y), it is possible to reduce the capacity required for memory 107 to 1/2. Therefore, the reduction effect improves as the number of elements increases.

Furthermore, this embodiment describes the case of 1 sample per 1 symbol, but the present invention can also be implemented in the case of 4 samples per 1 symbol by setting a time step of addition difference signal 115 to 1/4 (t+0, t+1/4, t+2/4, t+3/4, t+1, t+5/4, ...). Of course, changing this step otherwise will make the present invention applicable to any samples.

This embodiment describes the case where matched filtering processing is carried out by a convolver, but the present invention is also applicable to a case where matched filtering processing is carried out by a transversal filter or SAW filter.

### (Embodiment 6)

This embodiment describes a case where a known signal is changed when convolver 104 performs matched filtering processing and power is calculated using addition difference signal 115, which is the output of addition section 106.

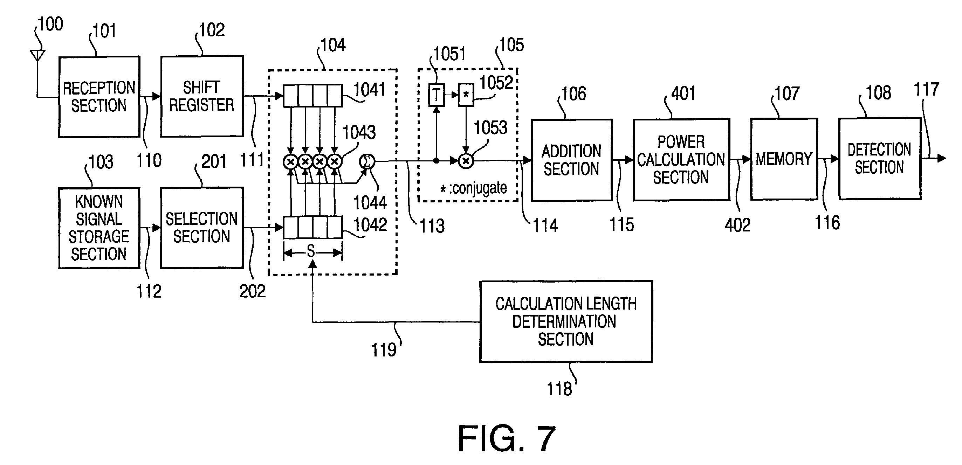

FIG.7 is a block diagram showing a configuration of a radio reception apparatus according to Embodiment 6 of the present invention. In FIG.7, the same components as those in FIG.1 are assigned the same reference numerals and detailed explanations thereof will be omitted.

The radio reception apparatus shown in FIG.7 is provided with selection section 201 for selecting known signal 112 output from known signal storage section 103 and power calculation section 401 for calculating power using addition difference signal 115, which is the output of addition section 106. Therefore, the known signal output to known signal delayer 1042 of convolver 104 is selected known signal 202 selected from among known signals stored in known signal storage section 103. Furthermore, power signal 402 obtained by power calculation section 401 is output to memory 107.

In the radio reception apparatus as configured above, shift register 102 that stores demodulated signal 110 demodulated by reception section 101 outputs s symbols of calculation series length 119 (denoted as "s") given by calculation length determination section 118 from the start (time t+0) of the estimation range to reception signal delayer 1041 of convolver 104 as reception signal 111 (here, suppose calculation series length s=4).

Selection section 201 selects one of n types of known signals stored in known signal storage section 103 and outputs s symbols (here, suppose calculation series length s=4) from the start of the selected known signal to known signal delayer 1042 of convolver 104 as selected known signal 202.

Convolver 104 performs matched filtering processing between reception signal 111 and selected known signal 202. That is, convolver 104 multiplies reception signal 111 and selected known signal 202 using their respective multipliers 1043 and adds up their respective multiplication results using adder 1044. Convolver 104 outputs the output of adder 1044 as short-term correlation signal 113 to difference calculation section 105. This short-term correlation signal 113 is recognized as a short-term correlation signal at time (t+0).

Then, shift register 102 outputs 4 symbols from the symbol at time (t+1) when 1 symbol is shifted as reception signal 111 to reception signal delayer 1041 of convolver 104. Known signal storage section 103 outputs 4 symbols from the 2nd symbol of the selected known signal as selected known signal 202 to known signal delayer 1042 of convolver 104.

In the same way as that described above, convolver 104 performs matched filtering processing and outputs short-term correlation signal 113 at time (t+1) to difference calculation section 105. In this way, short-term correlation signals 113 are calculated from time (t+0) to time (t+N-4) (N is the signal length of the known signal series).

Calculated short-term correlation signal 113 is sequentially output to difference calculation section 105 and difference calculation section 105 calculates difference vectors corresponding to 1 symbol of short-term correlation signal 113. That is, delayer 1051 delays short-term correlation signal 113 by 1 symbol, complex conjugate section 1052 acquires a complex conjugate of the short-term correlation signal and multiplier 1053 multiplies short-term correlation signal 113 by the complex conjugate of short-term correlation signal 113 delayed by 1 symbol. This calculation result is output as correlation difference signal 114 to addition section 106.

Correlation difference signal 114 obtained in this way is calculated for 1 series of selected known signals 202. Addition section 106 adds up correlation difference signal 114 and outputs the addition result as addition difference signal 115 at time (t+0) to power calculation section 401.

Likewise, addition difference signal 115 at time (t+1) by replacing t with t+1 is calculated. Thus, addition difference signal 115 from time (t+0) to time (t+M-1) is output to power calculation section 401 and power calculation section 401 calculates a vector power value using addition difference signal 115 and outputs the calculation result to memory 107 as power signal 402.

When the calculation of the first known signal series is completed, selection section 201 selects a second known signal series and carries out the above processing. The selection section 201 continues the above processing until the calculation of all (or some of) known signal series is completed.

At this time, storing the storage location, the type of a series of known signals and time information corresponding to power signal 402 in memory 107 according to, for example, a rule that the storage location = (known signal series information, time information) makes it easier to extract the known signal series and time information from detection section 108, which will be described later.

Detection section 108 sequentially calculates the size of the vector series of correlation signals 116 output from memory 107, searches correlation signal 116 of the maximum size, finds the size, storage location, the corresponding known signal series and its vector information and outputs this detected information as detected signal 117.

At this time, the size of correlation signal 116 generally expresses a correlation value between reception signal 101 and known signal 112 to be searched. The greater this value, the more certain this information can be. Next, the storage location shows a strong correlation with the time information as described above, and therefore it is easy to convert the storage location to the time information. The time information at this time indicates that known signal 112 to be searched is within the detected time of reception signal 101. Because of this, in a system in which sync signals of a plurality of types are inserted in a specific location of burst, it is possible to detect the type and location of a sync signal in demodulated signal 110 by regarding this sync signal as known signal 112 and the reception burst signal as demodulated signal 110 and thereby establish synchronization with the system.

Furthermore, by detection section 108 detecting m peak positions and vectors from the maximum value of correlation signal 116, it is also possible to estimate a multipath condition that occurs due to differences in the propagation path.

This embodiment describes the case where calculation series length 119 (s) given by calculation series length 118 is 4, but the present invention is also applicable to a case where calculation series length s is not 4. The greater the calculation series length, greater the effect of averaging of noise is. For example, an improvement to the characteristic by averaging is expected by setting s=4, thus drastically alleviating the reception environment condition for establishing synchronization and offering prospects of great effects especially in a harsh CNR environment. On the other hand, since the phase is shifted for every symbol due to influences of frequency shifts, increasing calculation series length s will make the system more susceptible to frequency shifts, etc.

For this reason, whether or not to increase calculation series length s up to a size equivalent to the known signal series length should be considered according to the situation as appropriate. The optimal value of this calculation series length s depends on conditions such as the symbol rate, frequency accuracy and system design. In general, the frequency accuracy is sufficiently high with respect to the symbol rate, and therefore problems are not likely to occur if s is set within the range of 4 to 6.

Furthermore, this embodiment describes the method of estimating corresponding known signal 112 and the time during which known signal 112 exists from the peak position of correlation signal 116, but correlation signal 116 has various other characteristics and can also be used to estimate a multipath environment by detecting a plurality of peaks, for example.

This embodiment uses a vector power value as the information stored in memory 107, and thus is characterized in that if the vector value is information consisting of two elements such as (x,y), it is possible to reduce the capacity required for memory 107 to 1/2. Therefore, the reduction effect improves as the number of elements increases.

Furthermore, this embodiment describes the case of 1 sample per 1 symbol, but the present invention can also be implemented in the case of 4 samples per 1 symbol by setting a time step of addition difference signal 115 to 1/4 (t+0, t+1/4, t+2/4, t+3/4, t+1, t+5/4, ···). Of course, changing this step otherwise will make the present invention applicable to any samples.

### (Embodiment 7)

This embodiment describes a case where the calculation series length is controlled according to the reception situation.

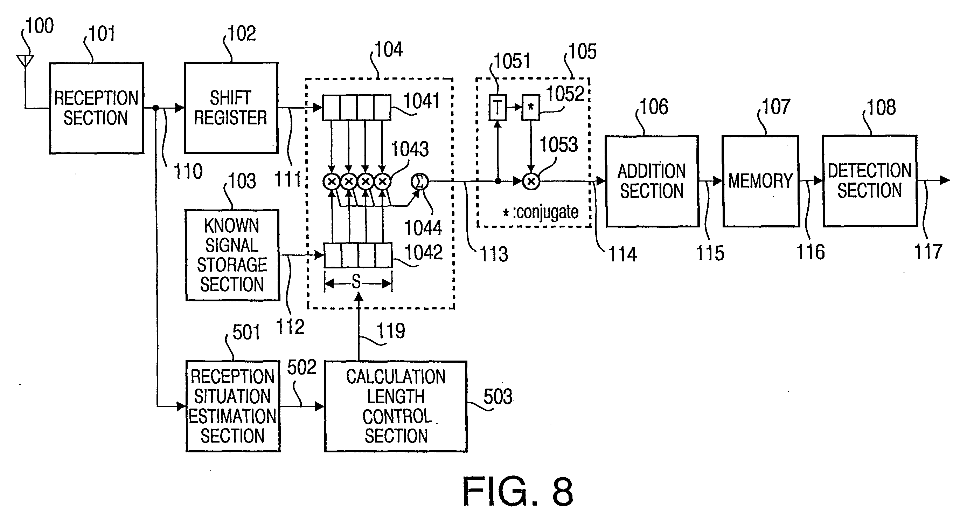

FIG.8 is a block diagram showing a configuration of a radio reception apparatus according to Embodiment 7 of the present invention. In FIG.8, the same components as those in FIG.1 are assigned the same reference numerals and detailed explanations thereof will be omitted.

The radio reception apparatus shown in FIG.8 is provided with reception situation estimation section 501 that estimates the reception situation from a reception signal and calculation length control section 503 for controlling the calculation series length based on the reception situation. Therefore, the calculation series length is determined according to the reception situation estimated by reception situation estimation section 501 and the calculation series length is output to known signal delayer 1042 of convolver 104. Convolver 104 performs matched filtering processing with the determined calculation series length.

In the radio reception apparatus as configured above, shift register 102 that stores demodulated signal 110 demodulated by reception section 101 outputs s symbols of calculation series length 119 (denoted as "s") controlled by calculation length control section 501 from the start (time t+0) of the estimation range to reception signal delayer 1041 of convolver 104 as reception signal 111 (here, suppose calculation series length s=4).

Known signal storage section 103 outputs s symbols (here, suppose calculation series length s = 4) from a known signal as known signal 112 to known signal delayer 1042 of convolver 104.

Reception situation estimation section 501 estimates its CNR using demodulated signal 110 and outputs the estimation result to calculation length control section 503 as estimated reception situation 502. Calculation length control section 503 controls the calculation series length according to estimated reception situation 502. For example, calculation length control section 503 controls calculation series length 119 (s) to a large value if the CNR is good and controls calculation series length 119 (s) to a small value if the CNR is bad.

Convolver 104 performs matched filtering processing between reception signal 111 and known signal 112. That is, convolver 104 multiplies reception signal 111 by known signal 112 using their respective multipliers 1043 and adds up their respective multiplication results using adder 1044. Convolver 104 outputs the output of adder 1044 as short-term correlation signal 113 to difference calculation section 105. This short-term correlation signal 113 is recognized as a short-term correlation signal at time (t+0).

Then, shift register 102 outputs 4 symbols from the symbol at time (t+1) when 1 symbol is shifted as reception signal 111 to reception signal delayer 1041 of convolver 104. Known signal storage section 103 outputs 4 symbols from the 2nd symbol of the selected known signal as known signal 112 to known signal delayer 1042 of convolver 104.

In the same way as that described above, convolver 104 performs matched filtering processing and outputs short-term correlation signal 113 at time (t+1) to difference calculation section 105. In this way, short-term correlation signals 113 are calculated from time (t+0) to time (t+N-4) (N is the signal length of the known signal series).

Calculated short-term correlation signal 113 is sequentially output to difference calculation section 105 and difference calculation section 105 calculates difference vectors corresponding to 1 symbol of short-term correlation signal 113. That is, delayer 1051 delays short-term correlation signal 113 by 1 symbol, complex conjugate section 1052 acquires a complex conjugate of the short-term correlation signal and multiplier 1053 multiplies short-term correlation signal 113 by the complex conjugate of short-term correlation signal 113 delayed by 1 symbol. This calculation result is output as correlation difference signal 114 to addition section 106.

Correlation difference signal 114 obtained in this way is calculated for 1 series of known signals 112. Addition section 106 adds up correlation difference signal 114 and outputs the addition result as addition difference signal 115 at time (t+0) to memory 107.

Likewise, addition difference signal 115 at time (t+1) by replacing t with t+1 is calculated. Thus, addition difference signal 115 from time (t+0) to time (t+M-1) is stored in memory 107.

At this time, storing the storage location and time information corresponding to addition difference signal 115 in memory 107 according to, for example, a rule that the storage location = time information makes it easier to extract the known signal series and time information from detection section 108, which will be described later.

Detection section 108 sequentially calculates the size of the vector series of correlation signals 116 output from memory 107, searches correlation signal 116 of the maximum size, finds the size, storage location and its vector information and outputs this detected information as detected signal 117.

At this time, the size of correlation signal 116 generally expresses a correlation value between reception signal 101 and known signal 112 to be searched. The greater this value, the more certain this information can be. Next, the storage location shows a strong correlation with the time information as described above, and therefore it is easy to convert the storage location to the time information. The time information at this time indicates that known signal 112 to be searched is within the detected time of reception signal 101. Because of this, in a system in which sync signals of a plurality of types are inserted in a specific location of burst, it is possible to detect the type and location of a sync signal in demodulated signal 110 by regarding this sync signal as known signal 112 and the reception burst signal as demodulated signal 110 and thereby establish synchronization with the system.

Furthermore, by detection section 108 detecting m peak positions and vectors from the maximum value of correlation signal 116, it is also possible to estimate a multipath condition that occurs due to differences in the propagation path.

This embodiment describes the case where calculation series length 119 (s) given by calculation series length 118 is 4, but the present invention is also applicable to a case where calculation series length s is not 4. Calculation series length s is a value controlled by calculation length control section 503 and is variable as described above. Regarding control of calculation series length s, the case where CNR of demodulated signal 110 is estimated is shown as an example, but it is also possible to use parameters other than CNR, for example, reception power, reception quality (quality factor such as Eb/No). The greater the calculation series length s, the greater the effect of averaging noise is.

For this reason, if estimated reception situation 502 of reception situation estimation section 501 is good, reducing the value of calculation series length s can also simplify the calculation. Furthermore, the presence of a frequency shift causes the phase to be shifted for every symbol as its influence and an error is produced when calculation series length s is set to a large value. For this reason, equalizing the size of calculation series length s to the size of the known signal series length may not be desirable. The optimal value of this calculation series length s depends on conditions such as the symbol rate, frequency accuracy and system design. In general, the frequency accuracy is sufficiently high with respect to the symbol rate, and therefore problems are not likely to occur if s is set within the range of 4 to 6.

Furthermore, this embodiment describes the method of estimating corresponding known signal 112 and the time during which known signal 112 exists from the peak position of correlation signal 116, but correlation signal 116 has various other characteristics and can also be used to estimate a multipath environment by detecting a plurality of peaks, for example.

Furthermore, this embodiment describes the case of 1 sample per 1 symbol, but the present invention can also be implemented in the case of 4 samples per 1 symbol by setting a time step of addition difference signal 115 to 1/4 (t+0, t+1/4, t+2/4, t+3/4, t+1, t+5/4, ···). Of course, changing this step otherwise will make the present invention applicable to any samples.

The calculation series length s may be controlled to change corresponding to the number of times the synchronization timing is detected.

This embodiment describes the case where matched filtering processing is carried out by the convolver, but the present invention is also applicable to a case where matched filtering processing is carried out by a transversal filter or SAW filter.

### (Embodiment 8)

This embodiment describes a case where a known signal is changed when convolver 104 performs matched filtering processing and the calculation series length is controlled according to the reception situation.

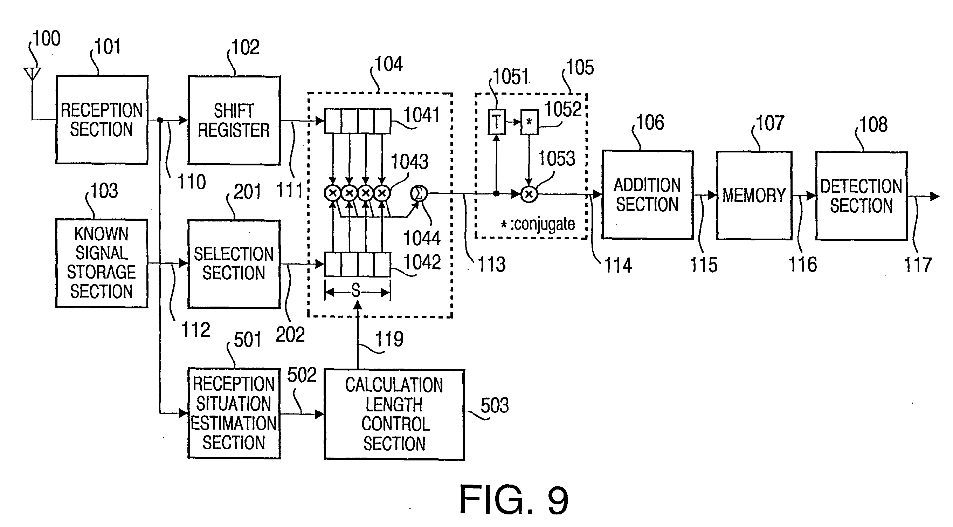

FIG.9 is a block diagram showing a configuration of a radio reception apparatus according to Embodiment 8 of the present invention. In FIG.9, the same components as those in FIG.1 are assigned the same reference numerals and detailed explanations thereof will be omitted.

The radio reception apparatus shown in FIG.9 is provided with selection section 201 for selecting known signal 112 output from known signal storage section 103, reception situation estimation section 501 that estimates the reception situation from a reception signal and calculation length control section 503 for controlling the calculation series length based on the reception situation. Therefore, the known signal output to known signal delayer 1042 of convolver 104 is selected known signal 202 selected from known signals stored in known signal storage section 103. The calculation series length is determined according to the reception situation estimated by reception situation estimation section 501 and the calculation series length is output to known signal delayer 1042 of convolver 104. Convolver 104 performs matched filtering processing with the determined calculation series length.

In the radio reception apparatus as configured above, shift register 102 that stores demodulated signal 110 demodulated by reception section 101 outputs s symbols of calculation series length 119 (denoted as "s") controlled by calculation length control section 501 from the start (time t+0) of the estimation range to reception signal delayer 1041 of convolver 104 as reception signal 111 (here, suppose calculation series length s=4).

Selection section 201 selects one of n types of known signals stored in known signal storage section 103 and outputs s symbols (here, suppose calculation series length s=4) from the start of the selected known signal to known signal delayer 1042 of convolver 104 as selected known signal 202.

Reception situation estimation section 501 estimates its CNR using demodulated signal 110 and outputs the estimation result to calculation length control section 503 as estimated reception situation 502. Calculation length control section 503 controls the calculation series length according to estimated reception situation 502. For example, calculation length control section 503 controls calculation series length 119 (s) to a large value if the CNR is good and controls calculation series length 119 (s) to a small value if the CNR is bad.

Convolver 104 performs matched filtering processing between reception signal 111 and selected known signal 202. That is, convolver 104 multiplies reception signal 111 by selected known signal 202 using their respective multipliers 1043 and adds up their respective multiplication results using adder 1044. Convolver 104 outputs the output of adder 1044 as short-term correlation signal 113 to difference calculation section 105. This short-term correlation signal 113 is recognized as a short-term correlation signal at time (t+0).

Then, shift register 102 outputs 4 symbols from the symbol at time (t+1) when 1 symbol is shifted as reception signal 111 to reception signal delayer 1041 of convolver 104. Known signal storage section 103 outputs 4 symbols from the 2nd symbol of the selected known signal as selected known signal 202 to known signal delayer 1042 of convolver 104.

In the same way as that described above, convolver 104 performs matched filtering processing and outputs short-term correlation signal 113 at time (t+1) to difference calculation section 105. In this way, short-term correlation signals 113 are calculated from time (t+0) to time (t+N-4) (N is the signal length of the known signal series).

Calculated short-term correlation signal 113 is sequentially output to difference calculation section 105 and difference calculation section 105 calculates difference vectors corresponding to 1 symbol of short-term correlation signal 113. That is, delayer 1051 delays short-term correlation signal 113 by 1 symbol, complex conjugate section 1052 acquires a complex conjugate of the short-term correlation signal and multiplier 1053 multiplies short-term correlation signal 113 by the complex conjugate of short-term correlation signal 113 delayed by 1 symbol. This calculation result is output as correlation difference signal 114 to addition section 106.

Correlation difference signal 114 obtained in this way is calculated for 1 series of selected known signals 202. Addition section 106 adds up correlation difference signal 114 and outputs the addition result as addition difference signal 115 at time (t+0) to memory 107.

Likewise, addition difference signal 115 at time (t+1) by replacing t with t+1 is calculated. Thus, addition difference signal 115 from time (t+0) to time (t+M-1) is stored in memory 107.

When the calculation of the first known signal series is completed, selection section 201 selects a second known signal series and carries out the above processing. The selection section 201 continues the above processing until the calculation of all (or some of) known signal series is completed.

At this time, storing the storage location, the type of a series of known signals and time information corresponding to addition difference signal 115 in memory 107 according to, for example, a rule that the storage location = (known signal series information, time information) makes it easier to extract the known signal series and time information from detection section 108, which will be described later.

Detection section 108 sequentially calculates the size of the vector series of correlation signals 116 output from memory 107, searches correlation signal 116 of the maximum size, finds the size, storage location, the corresponding known signal series and its vector information and outputs this detected information as detected signal 117.

At this time, the size of correlation signal 116 generally expresses a correlation value between reception signal 101 and known signal 112 to be searched. The greater this value, the more certain this information can be. Next, the storage location shows a strong correlation with the time information as described above, and therefore it is easy to convert the storage location to the time information. The time information at this time indicates that known signal 112 to be searched is within the detected time of reception signal 101. Because of this, in a system in which sync signals of a plurality of types are inserted in a specific location of burst, it is possible to detect the type and location of a sync signal in demodulated signal 110 by regarding this sync signal as known signal 112 and the reception burst signal as demodulated signal 110 and thereby establish synchronization with the system.

Furthermore, by detection section 108 detecting m peak positions and vectors from the maximum value of correlation signal 116, it is also possible to estimate a multipath condition that occurs due to differences in the propagation path.

This embodiment describes the case where calculation series length 119 (s) given by calculation series length 118 is 4, but the present invention is also applicable to a case where calculation series length s is not 4. Calculation series length s is a value controlled by calculation length control section 503 and is variable as described before. Regarding control of calculation series length s, the case where CNR of demodulated signal 110 is estimated is shown as an example, but it is also possible to use parameters other than CNR, for example, reception power, reception quality (quality factor such as Eb/No). The greater the calculation series length s, the greater the effect of averaging noise is.

For this reason, if estimated reception situation 502 of reception situation estimation section 501 is good, reducing the value of calculation series length s can also simplify the calculation. For example, an improvement to the characteristic by averaging is expected by setting s=4, thus drastically alleviating the reception environment condition for establishing synchronization and offering prospects of great effects especially in a harsh CNR environment.

Furthermore, the presence of a frequency shift causes the phase to be shifted for every symbol as its influence and an error is produced when calculation series length s is set to a large value. For this reason, equalizing the size of calculation series length s to the size of the known signal series length may not be desirable. The optimal value of this calculation series length s depends on conditions such as the symbol rate, frequency accuracy and system design. In general, the frequency accuracy is sufficiently high with respect to the symbol rate, and therefore problems are not likely to occur if s is set within the range of 4 to 6.

Furthermore, this embodiment describes the method of estimating corresponding known signal 112 and the time during which known signal 112 exists from the peak position of correlation signal 116, but correlation signal 116 has various other characteristics and can also be used to estimate a multipath environment by detecting a plurality of peaks, for example.

Furthermore, this embodiment describes the case of 1 sample per 1 symbol, but the present invention can also be implemented in the case of 4 samples per 1 symbol by setting a time step of addition difference signal 115 to 1/4 (t+0, t+1/4, t+2/4, t+3/4, t+1, t+5/4, ···). Of course, changing this step otherwise will make the present invention applicable to any samples.

### (Embodiment 9)

This embodiment describes a case where frequency estimation is performed using the detected information output from detection section 108 and the calculation series length is controlled based on the estimated frequency.

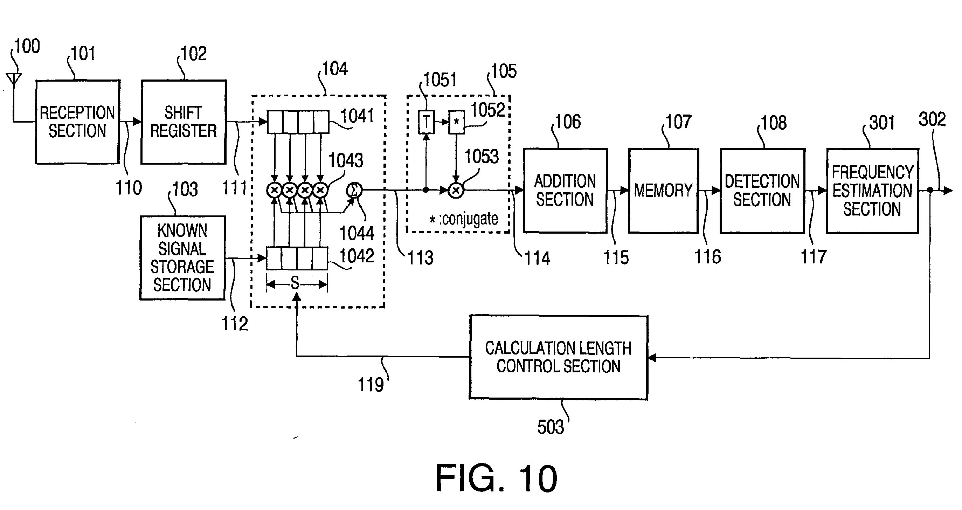

FIG.10 is a block diagram showing a configuration of a radio reception apparatus according to Embodiment 9 of the present invention. In FIG.10, the same components as those in FIG.1 are assigned the same reference numerals and detailed explanations thereof will be omitted.

The radio reception apparatus shown in FIG.10 is provided with frequency estimation section 301 for estimating a frequency based on the detection information output from detection section 108 and calculation length control section 503 for controlling the calculation series length according to the output of frequency estimation section 301.

In the radio reception apparatus as configured above, calculation length control section 503 controls the calculation series length according to estimated frequency 302. For example, calculation length control section 503 controls calculation series length 119 (s) to a large value when estimated frequency 302 is close to a target frequency and controls calculation series length 119 (s) to a small value when the error from the target frequency is large.

Shift register 102 that stores demodulated signal 110 demodulated by reception section 101 outputs s symbols of calculation series length 119 (denoted as "s") given by calculation length determination section 118 from the start (time t+0) of the estimation range to reception signal delayer 1041 of convolver 104 as reception signal 111 (here, suppose calculation series length s=4).

Known signal storage section 103 outputs s symbols (here, suppose calculation series length s=4) from the start of the known signal to known signal delayer 1042 of convolver 104 as known signal 112.

Convolver 104 performs matched filtering processing between reception signal 111 and known signal 112. That is, convolver 104 multiplies reception signal 111 by known signal 112 using their respective multipliers 1043 and adds up their respective multiplication results using adder 1044. Convolver 104 outputs the output of adder 1044 as short-term correlation signal 113 to difference calculation section 105. This short-term correlation signal 113 is recognized as a short-term correlation signal at time (t+0).

Then, shift register 102 outputs 4 symbols from the symbol at time (t+1) when 1 symbol is shifted as reception signal 111 to reception signal delayer 1041 of convolver 104. Known signal storage section 103 outputs 4 symbols from the 2nd symbol of the known signal as known signal 112 to known signal delayer 1042 of convolver 104.

In the same way as that described above, convolver 104 performs matched filtering processing and outputs short-term correlation signal 113 at time (t+1) to difference calculation section 105. In this way, short-term correlation signals 113 are calculated from time (t+0) to time (t+N-4) (N is the signal length of the known signal series).

Calculated short-term correlation signal 113 is sequentially output to difference calculation section 105 and difference calculation section 105 calculates difference vectors corresponding to 1 symbol of short-term correlation signal 113. That is, delayer 1051 delays short-term correlation signal 113 by 1 symbol, complex conjugate section 1052 acquires a complex conjugate of the short-term correlation signal and multiplier 1053 multiplies short-term correlation signal 113 by the complex conjugate of short-term correlation signal 113 delayed by 1 symbol. This calculation result is output as correlation difference signal 114 to addition section 106.

Correlation difference signal 114 obtained in this way is calculated for 1 series of known signals 112. Addition section 106 adds up correlation difference signal 114 and outputs the addition result as addition difference signal 115 at time (t+0) to memory 107.

Likewise, addition difference signal 115 at time (t+1) by replacing t with t+1 is calculated. Thus, addition difference signal 115 from time (t+0) to time (t+M-1) is stored in memory 107. At this time, storing the storage location and time information corresponding to addition difference signal 115 in memory 107 according to, for example, a rule that the storage location = time information makes it easier to extract the known signal series and time information from detection section 108, which will be described later.

Detection section 108 sequentially calculates the size of the vector series of correlation signals 116 output from memory 107, searches correlation signal 116 of the maximum size, finds the size, storage location and its vector information and outputs this detected information as detected signal 117.

At this time, the size of correlation signal 116 generally expresses a correlation value between reception signal 101 and known signal 112 to be searched. The greater this value, the more certain this information can be. Next, the storage location shows a strong correlation with the time information as described above, and therefore it is easy to convert the storage location to the time information. The time information at this time indicates that known signal 112 to be searched is within the detected time of reception signal 101. Because of this, in a system in which sync signals of a plurality of types are inserted in a specific location of burst, it is possible to detect the type and location of a sync signal in demodulated signal 110 by regarding this sync signal as known signal 112 and the reception burst signal as demodulated signal 110 and thereby establish synchronization with the system.

Furthermore, by detection section 108 detecting m peak positions and vectors from the maximum value of correlation signal 116, it is also possible to estimate a multipath condition that occurs due to differences in the propagation path.

Furthermore, this correlation signal 116 performs a convolution calculation between reception signal 111 and known signal 112, removes the information component and uses the difference vector, and in this way the vector angle includes a frequency component. Frequency estimation section 301 detects the frequency component from detected signal 117 output from detection section 108 and outputs estimated frequency 302. This estimated frequency 302 can be generally used as a frequency shift between the transmitter and receiver and estimated frequency 302 can also be used as the control signal of frequency control, for example.

This embodiment describes the case where calculation series length 119 (s) given by calculation series length 118 is 4, but the present invention is also applicable to a case where calculation series length s is not 4. Regarding control of calculation series length s, the case where estimated frequency 302 given by frequency estimation section 301 is used is shown as an example, but it is also possible to use values taking into account parameters other than the estimated frequency, for example, reception power, reception quality (quality factor such as Eb/No). The greater the calculation series length s, the greater the effect of averaging noise is.

For this reason, if estimated frequency 302 of frequency estimation section 301 is good (the error from the target value is small or when estimated frequency 302 shows a frequency shift, its absolute value is small), reducing the value of calculation series length s can also simplify the calculation. When frequency estimation section 301 does not output estimated frequency 302 as in the case of the first execution, it is desirable to give an optimal initial value to the system obtained from the frequency error range, symbol rate and sensitivity point CNR, etc.

This embodiment describes the case where difference calculation section 105 calculates difference vectors corresponding to 1 symbol, but calculating difference vectors between 2 symbols doubles the amount of variation of difference vector 114 corresponding to the frequency. Because of this, when the CNR is sufficient and it is desired to improve the frequency accuracy, it is recommended to increase calculation symbol intervals.

Furthermore, this embodiment describes the method of estimating corresponding known signal 112 and the time during which known signal 112 exists from the peak position of correlation signal 116, but correlation signal 116 has various other characteristics and can also be used to estimate a multipath environment by detecting a plurality of peaks, for example.

Furthermore, this embodiment describes the case of 1 sample per 1 symbol, but the present invention can also be implemented in the case of 4 samples per 1 symbol by setting a time step of addition difference signal 115 to 1/4 (t+0, t+1/4, t+2/4, t+3/4, t+1, t+5/4, ···). Of course, changing this step otherwise will make the present invention applicable to any samples.

This embodiment describes the case where matched filtering processing is carried out by the convolver, but the present invention is also applicable to a case where matched filtering processing is carried out by a transversal filter or SAW filter.

### (Embodiment 10)

This embodiment describes a case where a known signal is changed when matched filtering processing is performed by convolver 104, frequency estimation is performed using the detection information output from detection section 108 and the calculation series length is controlled based on the estimated frequency.

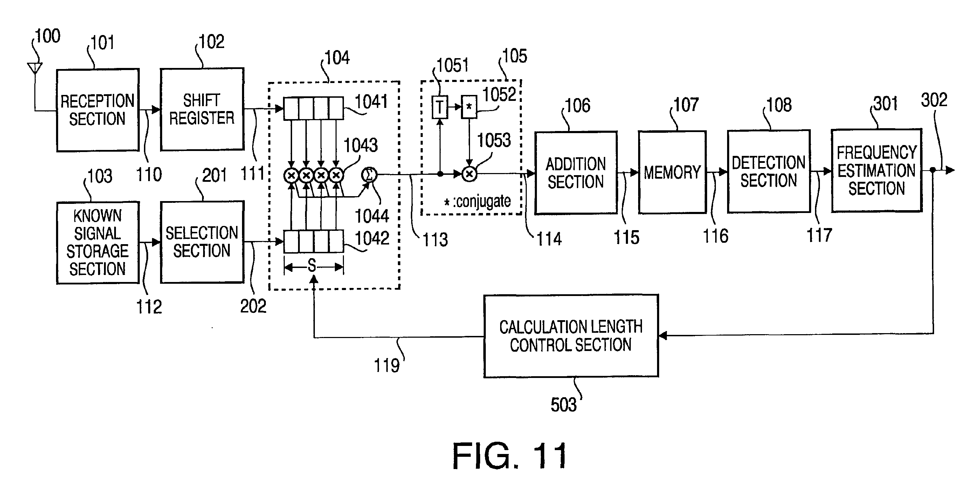

FIG.11 is a block diagram showing a configuration of a radio reception apparatus according to Embodiment 10 of the present invention. In FIG.11, the same components as those in FIG.1 are assigned the same reference numerals and detailed explanations thereof will be omitted.

The radio reception apparatus shown in FIG.11 is provided with selection section 201 for selecting known signal 112 output from known signal storage section 103, frequency estimation section 301 for estimating a frequency based on the detected information output from detection section 108 and calculation length control section 503 for controlling the calculation series length according to the output of frequency estimation section 301.

In the radio reception apparatus as configured above, calculation length control section 503 controls the calculation series length according to estimated frequency 302. For example, calculation length control section 503 controls calculation series length 119 (s) to a large value when estimated frequency 302 is close to a target frequency and controls calculation series length 119 (s) to a small value when the error from the target frequency is large.

Shift register 102 that stores demodulated signal 110 demodulated by reception section 101 outputs s symbols of calculation series length 119 (denoted as "s") given by calculation length determination section 118 from the start (time t+0) of the estimation range to reception signal delayer 1041 of convolver 104 as reception signal 111 (here, suppose calculation series length s=4).

Selection section 201 selects one of n types of known signals stored in known signal storage section 103 and outputs s symbols (here, suppose calculation series length s=4) from the start of the selected known signal to known signal delayer 1042 of convolver 104 as known signal 112.

Convolver 104 performs matched filtering processing between reception signal 111 by selected known signal 202. That is, convolver 104 multiplies reception signal 111 and selected known signal 202 using their respective multipliers 1043 and adds up their respective multiplication results using adder 1044. Convolver 104 outputs the output of adder 1044 as short-term correlation signal 113 to difference calculation section 105. This short-term correlation signal 113 is recognized as a short-term correlation signal at time (t+0).

Then, shift register 102 outputs 4 symbols from the symbol at time (t+1) when 1 symbol is shifted as reception signal 111 to reception signal delayer 1041 of convolver 104. Known signal storage section 103 outputs 4 symbols from the 2nd symbol of the selected known signal as selected known signal 202 to known signal delayer 1042 of convolver 104.

In the same way as that described above, convolver 104 performs matched filtering processing and outputs short-term correlation signal 113 at time (t+1) to difference calculation section 105. In this way, short-term correlation signals 113 are calculated from time (t+0) to time (t+N-4) (N is the signal length of the known signal series).

Calculated short-term correlation signal 113 is sequentially output to difference calculation section 105 and difference calculation section 105 calculates difference vectors corresponding to 1 symbol of short-term correlation signal 113. That is, delayer 1051 delays short-term correlation signal 113 by 1 symbol, complex conjugate section 1052 acquires a complex conjugate of the short-term correlation signal and multiplier 1053 multiplies short-term correlation signal 113 by the complex conjugate of short-term correlation signal 113 delayed by 1 symbol. This calculation result is output as correlation difference signal 114 to addition section 106.

Correlation difference signal 114 obtained in this way is calculated for 1 series of known signals 112. Addition section 106 adds up correlation difference signal 114 and outputs the addition result as addition difference signal 115 at time (t+0) to memory 107.

Likewise, addition difference signal 115 at time (t+1) by replacing t with t+1 is calculated. Thus, addition difference signal 115 from time (t+0) to time (t+M-1) is stored in memory 107.

When the calculation of the first known signal series is completed, selection section 201 selects a second known signal series and carries out the above processing. The selection section 201 continues the above processing until the calculation of all (or some of) known signal series is completed.

At this time, storing the storage location, the type of a series of known signals and time information corresponding to addition difference signal 115 in memory 107 according to, for example, a rule that the storage location = (known signal series information, time information) makes it easier to extract the known signal series and time information from detection section 108, which will be described later.

Detection section 108 sequentially calculates the size of the vector series of correlation signals 116 output from memory 107, searches correlation signal 116 of the maximum size, finds the size, storage location, the corresponding known signal series and its vector information and outputs this detected information as detected signal 117.

At this time, the size of correlation signal 116 generally expresses a correlation value between reception signal 101 and known signal 112 to be searched. The greater this value, the more certain this information can be. Next, the storage location shows a strong correlation with the time information as described above, and therefore it is easy to convert the storage location to the time information. The time information at this time indicates that known signal 112 to be searched is within the detected time of reception signal 101. Because of this, in a system in which sync signals of a plurality of types are inserted in a specific location of burst, it is possible to detect the type and location of a sync signal in demodulated signal 110 by regarding this sync signal as known signal 112 and the reception burst signal as demodulated signal 110 and thereby establish synchronization with the system.

Furthermore, by detection section 108 detecting m peak positions and vectors from the maximum value of correlation signal 116, it is also possible to estimate a multipath condition that occurs due to differences in the propagation path.

Furthermore, this correlation signal 116 performs a convolution calculation between reception signal 111 and known signal 112, removes the information component and uses the difference vector, and in this way the vector angle includes a frequency component. Frequency estimation section 301 detects the frequency component from detected signal 117 output from detection section 108 and outputs estimated frequency 302. This estimated frequency 302 can be generally used as a frequency shift between the transmitter and receiver and estimated frequency 302 can also be used as the control signal of frequency control, for example.

This embodiment describes the case where calculation series length 119 (s) given by calculation series length 118 is 4, but the present invention is also applicable to a case where calculation series length s is not 4. Regarding control of calculation series length s, the case where estimated frequency 302 given by frequency estimation section 301 is used is shown as an example, but it is also possible to use values taking into account parameters other than the estimated frequency, for example, reception power, reception quality (quality factor such as Eb/No). The greater the calculation series length s, the greater the effect of averaging noise is.

For this reason, if estimated frequency 302 of frequency estimation section 301 is good (the error from the target value is small or when estimated frequency 302 shows a frequency shift, its absolute value is small), reducing the value of calculation series length s can also simplify the calculation. When frequency estimation section 301 does not output estimated frequency 302 as in the case of the first execution, it is desirable to give an optimal initial value to the system obtained from the frequency error range, symbol rate and sensitivity point CNR, etc.

This embodiment describes the case where difference calculation section 105 calculates difference vectors corresponding to 1 symbol, but calculating difference vectors between 2 symbols doubles the amount of variation of difference vector 114 corresponding to the frequency. Because of this, when the CNR is sufficient and it is desired to improve the frequency accuracy, it is recommended to increase calculation symbol intervals.

Furthermore, this embodiment describes the method of estimating corresponding known signal 112 and the time during which known signal 112 exists from the peak position of correlation signal 116, but correlation signal 116 has various other characteristics and can also be used to estimate a multipath environment by detecting a plurality of peaks, for example.

Furthermore, this embodiment describes the case of 1 sample per 1 symbol, but the present invention can also be implemented in the case of 4 samples per 1 symbol by setting a time step of addition difference signal 115 to 1/4 (t+0, t+1/4, t+2/4, t+3/4, t+1, t+5/4, ···). Of course, changing this step otherwise will make the present invention applicable to any samples.

The present invention is not limited to Embodiments 1 to 10 above, but can be implemented with various modifications. For example, the technologies described in Embodiments 1 to 10 above can be implemented, combined with one another as appropriate.

Furthermore, Embodiments 1 to 10 above describe the cases where the radio reception apparatus is mounted on a communication terminal apparatus, but the present invention is also applicable to a case where the radio reception apparatus of the present invention is mounted on a radio base station apparatus.

The radio reception apparatus of the present invention comprises a shift register for storing a series of reception signals, a known signal storage section for storing a series of known signals, a calculation length determination section for determining a calculation series length, a convolver for calculating convolution integration between symbol number s given by the calculation length determination section from a series of known signals sequentially output from the known signal storage section and a series of signals corresponding to s symbols selected at symbol intervals from the reception signal series, a difference calculation section for calculating difference vectors corresponding to 1 symbol of the signal series subjected to convolution integration, an addition section for sequentially adding up the difference vectors, memory for calculating addition difference vectors in the same way by shifting the reception signal series by 1 sample at a time and storing the time of shifting in association with the addition difference vectors and a detection section for detecting parts that satisfy a specific condition from the vectors stored in the memory.

This configuration makes it possible to detect a target known signal series from the reception signal and detect the reception time of the known signal series with stable performance from the reception signal series received in a harsh environment of signal to noise ratio (CNR).

The radio reception apparatus of the present invention comprises a shift register for storing a series of reception signals, a known signal storage section for storing a series of n (n: natural number of 2 or above) known signals, a calculation length determination section for determining a calculation series length, a switching section for switching between known signal series, a convolver for calculating convolution integration between symbol number s given by the calculation length determination section from a series of known signals sequentially output from the known signal storage section and a series of signals corresponding to s symbols selected at symbol intervals from the reception signal series, a difference calculation section for calculating difference vectors corresponding to 1 symbol of the signal series subjected to convolution integration, an addition section for sequentially adding up the difference vectors, memory for calculating addition difference vectors in the same way by shifting the reception signal series by 1 sample at a time and storing the type of the known signal series, the time of shifting and the addition difference vectors associated with one another and a detection section for detecting parts that satisfy a specific condition from the vectors stored in the memory.

This configuration makes it possible to detect a target known signal series from the reception signal and detect the known signal series sent from a plurality of known signal series candidates and the reception time with stable performance from the reception signal series received in a harsh CNR environment.

The radio reception apparatus of the present invention comprises a shift register for storing a series of reception signals, a known signal storage section for storing a series of known signals, a convolver for calculating convolution integration between symbol number s given by the calculation length determination section from a series of known signals sequentially output from the known signal storage section and a series of signals corresponding to s symbols selected at symbol intervals from the reception signal series, a difference calculation section for calculating difference vectors corresponding to 1 symbol of the signal series subjected to convolution integration, an addition section for sequentially adding up the difference vectors, memory for calculating addition difference vectors in the same way by shifting the reception signal series by 1 sample at a time and storing the time of shifting in association with the addition difference vectors, a detection section for detecting parts that satisfy a specific condition from the vectors stored in the memory, a reception situation estimation section for estimating the reception situation from the reception signal and a calculation length control section for controlling the calculation series length of the convolver from the estimated reception situation.

This configuration makes it possible to detect a target known signal series from the reception signal and detect the reception time of the known signal series from the reception signal series received while changing optimal calculation series length s from the estimated CNR and adapting to the CNR environment adequately.

The radio reception apparatus of the present invention comprises a shift register for storing a series of reception signals, a known signal storage section for storing a series of n (n: natural number of 2 or above) known signals, a switching section for switching between known signal series, a convolver for calculating convolution integration between symbol number s given by the calculation length determination section from a series of known signals sequentially output from the known signal storage section and a series of signals corresponding to s symbols selected at symbol intervals from the reception signal series, a difference calculation section for calculating difference vectors corresponding to 1 symbol of the signal series subjected to convolution integration, an addition section for sequentially adding up the difference vectors, memory for calculating addition difference vectors in the same way by shifting the reception signal series by 1 sample at a time and storing the type of the known signal series, the time of shifting and the addition difference vectors associated with one another, a detection section for detecting parts that a satisfy specific condition from the vectors stored in the memory, a reception situation estimation section for estimating the reception situation from the reception signal and a calculation length control section for controlling the calculation series length from the estimated reception situation.

This configuration makes it possible to detect a target known signal series from the reception signal and detect the known signal series sent from a plurality of known signal series candidates and the reception time from the reception signal series received while changing optimal calculation series length from the estimated CNR and adapting to the CNR environment adequately.

The radio reception apparatus of the present invention comprises a shift register for storing a series of reception signals, a known signal storage section for storing a series of known signals, a calculation length determination section for determining a calculation series length, a convolver for calculating convolution integration between symbol number s given by the calculation length determination section from a series of known signals sequentially output from the known signal storage section and a series of signals corresponding to s symbols selected at symbol intervals from the reception signal series, a difference calculation section for calculating difference vectors corresponding to 1 symbol of the signal series subjected to convolution integration, an addition section for sequentially adding up the difference vectors, memory for calculating addition difference vectors in the same way by shifting the reception signal series by 1 sample at a time and storing the time of shifting in association with the addition difference vectors, a detection section for detecting parts that satisfy a specific condition from the vectors stored in the memory and a frequency estimation section for estimating a frequency from the angle of a vector that satisfies a specific condition.

This configuration makes it possible to detect a target known signal series from the reception signal, estimate a frequency shift and detect the reception time of the known signal series and frequency with stable performance from the reception signal series received in a harsh CNR environment.

The radio reception apparatus of the present invention comprises a shift register for storing a series of reception signals, a known signal storage section for storing a series of known signals, a calculation length determination section for determining a calculation series length, a convolver for calculating convolution integration between symbol number s given by the calculation length determination section from a series of known signals sequentially output from the known signal storage section and a series of signals corresponding to s symbols selected at symbol intervals from the reception signal series, a difference calculation section for calculating difference vectors corresponding to 1 symbol of the signal series subjected to convolution integration, an addition section for sequentially adding up the difference vectors, memory for calculating addition difference vectors in the same way by shifting the reception signal series by 1 sample at a time and storing the time of shifting in association with the addition difference vectors, a detection section for detecting parts that satisfy a specific condition from the vectors stored in the memory and a frequency estimation section for estimating a frequency from the angle of a vector that satisfies a specific condition.

This configuration makes it possible to detect a target known signal series from the reception signal, estimate a frequency shift and detect the known signal series sent from among a plurality of known signal series candidates, the reception time and frequency with stable performance from the reception signal series received in a harsh CNR environment.

The radio reception apparatus of the present invention comprises a shift register for storing a series of reception signals, a known signal storage section for storing a series of known signals, a convolver for calculating convolution integration between symbol number s given by the calculation length determination section from a series of known signals sequentially output from the known signal storage section and a series of signals corresponding to s symbols selected at symbol intervals from the reception signal series, a difference calculation section for calculating difference vectors corresponding to 1 symbol of the signal series subjected to convolution integration, an addition section for sequentially adding up the difference vectors, memory for calculating addition difference vectors in the same way by shifting the reception signal series by 1 sample at a time and storing the time of shifting in association with the addition difference vectors, a detection section for detecting parts that satisfy a specific condition from the vectors stored in the memory, a frequency estimation section for estimating a frequency from the angle of a vector that satisfies a specific condition and a calculation length control section for determining the length of the calculation series length of the convolver from the estimation result of the frequency estimation section.

This configuration makes it possible to detect a target known signal series from the reception signal, estimate a frequency shift and detect the reception time of the known signal series and frequency with stable performance from the reception signal series received while changing optimal calculation series length from the estimated frequency.

The radio reception apparatus of the present invention comprises a shift register for storing a series of reception signals, a known signal storage section for storing a series of n (n: natural number of 2 or above) known signals, a switching section for switching between known signal series, a convolver for calculating convolution integration between symbol number s given by the calculation length determination section from a series of known signals sequentially output from the known signal storage section and a series of signals corresponding to s symbols selected at symbol intervals from the reception signal series, a difference calculation section for calculating difference vectors corresponding to 1 symbol of the signal series subjected to convolution integration, an addition section for sequentially adding up the difference vectors, memory for calculating addition difference vectors in the same way by shifting the reception signal series by 1 sample at a time and storing the type of the known signal series, the time of shifting and the addition difference vectors associated with one another, a detection section for detecting parts that satisfy a specific condition from the vectors stored in the memory, a frequency estimation section for estimating a frequency from the angle of a vector that satisfies a specific condition and a calculation length control section for determining the length of the calculation series length of the convolver from the estimation result of the frequency estimation section.

This configuration makes it possible to detect a target known signal series from the reception signal, estimate a frequency shift and detect the known signal series sent from a plurality of known signal series candidates, the reception time and frequency with stable performance from the reception signal series received while changing optimal calculation series length from the estimated frequency.

The radio reception apparatus of the present invention comprises a shift register for storing a series of reception signals, a known signal storage section for storing a series of known signals, a calculation length determination section for determining a calculation series length, a convolver for calculating convolution integration between symbol number s given by the calculation length determination section from a series of known signals sequentially output from the known signal storage section and a series of signals corresponding to s symbols selected at symbol intervals from the reception signal series, a difference calculation section for calculating difference vectors corresponding to 1 symbol of the signal series subjected to convolution integration, an addition section for sequentially adding up the difference vectors, a power calculation section for calculating the size of an addition difference vector, memory for calculating addition difference vectors in the same way by shifting the reception signal series by 1 sample at a time and storing the time of shifting in association with the addition difference vector power and a detection section for detecting parts that satisfy a specific condition from the vectors stored in the memory.

This configuration makes it possible to detect a target known signal series from the reception signal and detect the reception time of the known signal series with stable performance from the reception signal series received in a harsh CNR environment.

The radio reception apparatus of the present invention comprises a shift register for storing a series of reception signals, a known signal storage section for storing a series of n (n: natural number of 2 or above) known signals, a switching section for switching between known signal series, a calculation length determination section for determining the calculation series length, a convolver for calculating convolution integration between symbol number s given by the calculation length determination section from a series of known signals sequentially output from the known signal storage section and a series of signals corresponding to s symbols selected at symbol intervals from the reception signal series, a difference calculation section for calculating difference vectors corresponding to 1 symbol of the signal series subjected to convolution integration, an addition section for sequentially adding up the difference vectors, a power calculation section for calculating the size of an addition difference vector, memory for calculating addition difference vectors in the same way by shifting the reception signal series by 1 sample at a time and storing the type of the known signal series, the time of shifting and the addition difference vectors associated with one another and a detection section for detecting parts that satisfy a specific condition from the vectors stored in the memory.

This configuration makes it possible to detect a target known signal series from the reception signal and detect the known signal series sent from a plurality of known signal series candidates and the reception time with stable performance from the reception signal series received in a harsh CNR environment.

As shown above, the present invention can achieve great effects in synchronization processing especially in a harsh reception CNR environment. Furthermore, the present invention performs processing basically through calculations of difference vectors, which is little affected by frequency shifts in the reception environment, and is therefore extremely effective especially in the case of synchronizing with the system for the first time after power is turned on.

Moreover, since the CNR of a correlation value is relatively high, and therefore estimating a multipath environment using this provides prospects of high estimation results.

The present invention is not limited to the above described embodiments, and various variations and modifications may be possible without departing from the scope of the present invention.

This application is based on the Japanese Patent Application No. 2000-042267 filed on February 21, 2000, entire content of which is expressly incorporated by reference herein.

## Claims

1. A radio reception apparatus comprising:
correlation calculating means(104) for performing correlation calculation on a reception signal with a predetermined calculation length using a known signal;
delay detecting means(105) for performing delay detection using the signal after said correlation calculation; and
detecting means(108) for detecting synchronization timing from the delay detection output.

2. The radio reception apparatus according to claim 1, wherein said correlation calculation acquires a signal with a desired signal component included in the reception signal increased and performs delay detection using the signal.

3. The radio reception apparatus according to claim 1, further comprising selecting means(201) for selecting one known signal from a plurality of known signals.

4. The radio reception apparatus according to claim 3, wherein the detecting means identifies said known signal series when a synchronization timing is detected.

5. The radio reception apparatus according to claim 1, further comprising frequency estimating means(301) for detecting a frequency component included in the signal after delay detection.

6. The radio reception apparatus according to claim 5, further comprising first calculation length controlling means(503) for controlling said calculation length based on the frequency component estimated by the frequency estimating means.

7. The radio reception apparatus according to claim 6, wherein the first calculation length controlling means increases the calculation length as the frequency estimated by said frequency estimating means approximates to a target frequency.

8. The radio reception apparatus according to claim 6, wherein the first calculation length controlling means controls the calculation length according to the number of times synchronization timing is detected.

9. The radio reception apparatus according to claim 5, wherein the frequency estimating means detects a frequency shift.

10. The radio reception apparatus according to claim 1, further comprising power calculating means for calculating the output power after delay detection.

11. The radio reception apparatus according to claim 1, further comprising:
reception situation estimating means(501) for estimating the reception situation from the reception signal; and
second calculation length controlling means for controlling said calculation length according to the reception situation estimated by said reception situation estimating means.

12. The radio reception apparatus according to claim 11, wherein the second calculation length controlling means increases the calculation length when the reception situation is bad and decreases the calculation length when the reception situation is good.

13. The radio reception apparatus according to claim 11, wherein the second calculation length controlling means controls the calculation length according to the number of times the synchronization timing is detected.

14. A synchronization timing detection method comprising:
a correlation calculating step of performing correlation calculation on a reception signal with a predetermined calculation length using a known signal;
a delay detecting step of performing delay detection using the signal after said correlation calculation; and
a detecting step of detecting synchronization timing from the delay detection output.

15. The synchronization timing detection method according to claim 14, wherein said correlation calculating step acquires a signal with a desired signal component included in the reception signal increased and performs delay detection using the signal.

16. The synchronization timing detection method according to claim 14, further comprising a selecting step of selecting one known signal from a plurality of known signals.

17. The synchronization timing detection method according to claim 14, further comprising a frequency estimating step of detecting a frequency component included in the signal after the delay detection.

18. The synchronization timing detection method according to claim 17, further comprising a first calculation length controlling step of controlling said calculation length based on the frequency component estimated by the frequency estimation step.

19. The synchronization timing detection method according to claim 14, further comprising:
a reception situation estimating step of estimating the reception situation from the reception signal; and
a second calculation length controlling step of controlling said calculation length according to the reception situation estimated by said reception situation estimating step.
